# FASCICULE DE BREVET EUROPEEN

(11) **EP 0 981 798 B1**
(45) Date de publication et mention de la délivrance du brevet: **28.11.2001**
(21) Numéro de dépôt: 98924412.4
(22) Date de dépôt: 11.05.1998
(51) Int. Cl.: G06K 7/00

(54) **CONNECTEUR DU TYPE A ATTERRISSAGE DES CONTACTS POUR LE RACCORDEMENT D'UNE CARTE A MICROCIRCUITS**
VERBINDER MIT EINZIEHBAREN KONTAKTEN ZUM VERBINDEN EINER MIKROSCHALTUNGSKARTE
SLIDING CONTACT CONNECTOR FOR CONNECTING A CARD WITH MICROCIRCUITS

(30) Priorité: 13.05.1997 FR 9705810
(43) Date de publication de la demande: 01.03.2000
(73) Titulaire: ITT MANUFACTURING ENTERPRISES, INC., Wilmington, Delaware 19801 (US)
(72) Inventeur: BRICAUD, Hervé, F-39100 Dole (FR); VALCHER, Fabrice, F-39500 Damparis (FR)
(74) Mandataire: Kohn, Philippe
(86) Numéro de dépôt international: FR9800934
(87) Numéro de publication internationale: WO9852139

(56) Documents cités:
- EP-A- 0 167 356
- WO-A-95/13589
- US-A- 5 161 992

## Description

La présente invention concerne un connecteur pour le raccordement électrique d'une carte à circuit(s) intégré(s) à contact dont une face inférieure comporte des plages de raccordement.

L'invention concerne ainsi un connecteur pour raccordement d'une carte, aussi appelée carte à puce ou carte à microcircuits, comportant une pluralité de plages de raccordement électrique qui sont généralement alignées parallèlement à la direction d'introduction de la carte dans un dispositif de lecture/écriture.

L'invention concerne un connecteur du type comportant un socle en matériau isolant formant support pour des lames de contact électrique déformables élastiquement qui s'étendent parallèlement à une direction longitudinale d'introduction de la carte et dont des extrémités incurvées de contact, dans une position de contact, font saillie au delà de la face supérieure du socle pour coopérer avec les plages de raccordement de la carte.

Lors de l'introduction de la carte, les portions d'extrémité incurvées des lames de contact coopèrent d'abord avec un bord antérieur de la carte qui en provoque la déflexion élastique depuis leur position normale en saillie au delà de la face supérieure du socle du connecteur. La suite de la course d'introduction de la carte, jusqu'à ce qu'elle atteigne sa position finale d'introduction, se traduit par un frottement prolongé des zones convexes bombées des portions d'extrémité des lames de contact sur la face en regard du corps en matière plastique de la carte.

Ces chocs et frottement répétés lors de chaque introduction et de chaque extraction d'une carte provoquent très rapidement une usure de la portion d'extrémité incurvée des lames de contact, la qualité de la connexion établie entre la carte et le dispositif de lecture/écriture s'en trouvant rapidement affectée, notamment du fait de la disparition très rapide du revêtement de métal précieux, notamment de dorure, qui est généralement prévu sur ces portions d'extrémité.

Pour certaines applications, il est souhaitable que la carte en plastique ne soit pas endommagée, notamment parce que la carte porte des informations et/ou des messages publicitaires.

C'est par exemple le cas des cartes de paiement électronique pour lesquelles le nombre d'insertions d'une carte avant son remplacement doit être élevé.

Par ailleurs, les contacts de la première rangée des contacts du connecteur avec lesquels le bord transversal avant de la carte vient tout d'abord coopérer, subissent le frottement consécutif des plots de contacts appartenant au deux rangées de plots de la carte et ils s'usent donc deux fois plus vite que les contacts de la seconde rangée.

Enfin, toujours lorsque le connecteur est du type à contacts glissants, les plages ou plots de la carte ne comportent qu'une faible couche de dorure ou d'un autre métal précieux qui s'use très rapidement, notamment dans le cas des plots de la première rangée de la carte qui sont voisins de son bord transversal.

Afin de remédier à ces inconvénients, il a déjà été proposé dans le document EP-B1-0.468.828 un connecteur du type dans lequel une barre de commande de la position des extrémités de contact des lames de contact, reliée à un levier monté pivotant par rapport au socle autour d'un axe d'articulation perpendiculaire à la direction d'introduction longitudinale de la carte, est montée mobile entre :
- une position en retrait dans laquelle les extrémités de contact sont effacées en deçà de la face supérieure du socle, à l'encontre de leur élasticité propre, et vers laquelle elle est rappelée par des moyens élastiques ; et
- une position de contact dans laquelle les extrémités de contact sont en position de contact et vers laquelle elle est déplacée lorsque la carte, en fin de sa course d'introduction, coopère avec des moyens formant came associés à la barre de commande.

Selon la conception décrite et représentée dans ce document, la barre de commande relie entre eux deux longerons parallèles du levier qui s'étendent de part et d'autre d'un groupe de lames parallèles de contact et les extrémités libres des longerons, opposées aux extrémités de contact des lames de contact, comportent les cames de commande du pivotement du levier et de la barre de commande, et les moyens de rappel élastique sont constitués par une paire de ressorts de compression agencés entre le socle et ces extrémités des longerons.

Cette conception connue permet de remédier aux inconvénients qui ont été mentionnés précédemment dans la mesure où la venue en contact des extrémités libres de contact des lames de contact ne se produit qu'à la fin de la course d'introduction de la carte, mais elle n'est pas entièrement satisfaisante.

En effet, la réalisation des moyens de rappel élastique sous la forme de ressorts indépendants multiplie le nombre des composants et rend leur assemblage complexe, tout en augmentant la hauteur, c'est-à-dire l'épaisseur totale du connecteur.

Le fait d'agencer les ressorts et les cames dans la même zone des extrémités libres des longerons du levier qui portent la barre de commande n'offre que peu de facultés pour maitriser les différents efforts des bras de levier intervenant dans le fonctionnement du connecteur, notamment en vue de la maîtrise des efforts d'introduction et d'extraction de la carte.

Par ailleurs les surfaces formant cames avec lesquelles coopère le bord de la carte, pour résister à de très nombreuses manoeuvres, ne peuvent être réalisées en matériau plastique. Selon une solution connue, il a été proposé de réaliser ces cames de commande sous forme de galets métalliques montés à rotation dans les longerons du levier qui porte la barre de commande. Cette solution a aussi pour inconvénient d'augmenter encore le nombre de composants du connecteur et de compliquer l'assemblage.

Enfin, selon la conception connue de ce document, la position de l'axe d'articulation du levier qui porte la barre de commande des contacts est telle que le bras de levier est court et que, en position escamotée des contacts, la déflexion des contacts n'est pas la même pour les deux rangées de contacts.

L'invention a pour objet de proposer une nouvelle conception d'un connecteur du type de celui décrit et représenté dans le document EP-B1-0.468.828 qui remédie à ces inconvénients.

Dans ce but, l'invention propose un connecteur caractérisé en ce qu'il comporte un organe unique de commande des déplacements et de rappel élastique de la barre de commande.

Grâce à une telle conception, le levier qui porte la barre de commande peut être réalisé en matériau plastique et l'organe unique de commande est un composant en une seule pièce, notamment métallique, dont la fabrication est simple, la réalisation d'un connecteur à atterrissage des contacts étant obtenue par le seul montage sur le socle de deux pièces rapportées.

Selon d'autres caractéristiques de l'invention :
- l'organe unique est monté basculant par rapport au socle, autour d'un axe de rotation parallèle à l'axe d'articulation du levier, entre :
   - une première position angulaire vers laquelle il est rappelé élastiquement et dans laquelle il rappelle élastiquement la barre de commande vers sa position en retrait ; et
   - une seconde position angulaire vers laquelle il est déplacé par la carte, qui coopère avec des moyens formant came agencés sur l'organe unique, et dans laquelle la barre de commande est dans sa position de contact ;
   - l'organe unique comporte une traverse dont chacune des deux extrémités opposées est reliée au socle par une barre de torsion, et les deux barres de torsion sollicitent élastiquement l'organe unique en rotation vers sa première position angulaire ;
   - l'organe unique comporte un bras de commande qui s'étend radialement et dont l'extrémité libre s'étend en regard d'une surface de commande de la barre de commande avec laquelle il coopère, lorsque l'organe unique est dans sa première position angulaire, pour solliciter la barre vers sa position en retrait, et par rapport à laquelle il s'efface, lorsque l'organe unique est dans sa seconde position angulaire, pour permettre à la barre de commande de se déplacer vers sa position de contact sous l'action de l'élasticité propre des lames de contact ;
   - le bras de commande s'étend longitudinalement d'arrière en avant, sensiblement parallèlement au plan de la face supérieure du socle, à partir de la traverse de l'organe unique ;
   - le bras de commande s'étend en regard d'une surface de butée du socle avec laquelle il coopère pour déterminer une position angulaire maximale de l'organe unique ;
   - l'organe unique comporte deux bras parallèles de commande ;
   - l'organe unique comporte une patte d'actionnement qui s'étend radialement et qui comporte un profil de came avec lequel coopère la carte pour provoquer la rotation de l'organe unique de sa première position angulaire vers sa seconde position angulaire;
   - l'extrémité libre de la patte d'actionnement s'étend, en l'absence de carte, en saillie au dessus de la face supérieure du socle ;
   - la patte d'actionnement s'étend radialement d'avant en arrière à partir de la traverse de l'organe unique ;
   - la patte d'actionnement forme un angle d'environ 45° par rapport au bras de commande ;
   - l'extrémité libre de la patte d'actionnement est conformée en un patin qui, en position introduite de la carte, coopère avec une face de la carte sur laquelle elle exerce une force d'appui, notamment pour constituer un frein de carte ;
   - l'organe unique comporte deux pattes parallèles d'actionnement, et la carte coopère simultanément avec les deux profils de came ;
   - l'axe d'articulation du levier, la barre de commande, l'axe de rotation de l'organe unique, et les moyens formant came sont agencés consécutivement d'avant en arrière selon le sens d'introduction longitudinale de la carte ;
   - l'organe unique et le levier sont montés sous une face inférieure du socle ;
   - la surface de butée est formée dans ladite face inférieure du socle ;
   - l'organe unique est une pièce en tôle découpée et pliée;
   - la partie fixe de l'organe unique comporte au moins une patte de raccordement électrique prévue pour être reliée au plan de masse du circuit imprimé d'une plaque qui porte le socle pour évacuer les charges électrostatiques de la carte ;
   - la barre de commande s'étend perpendiculairement à la direction longitudinale des lames de contact, et elle coopère avec des extrémités libres en forme de bec de chaque lame de contact qui prolongent leurs extrémités incurvées de contact ;
   - le levier comporte deux longerons parallèles reliés entre eux par la barre de commande et qui s'étendent de part et d'autre d'un groupe de lames parallèles de contact.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus en perspective qui illustre un exemple de réalisation d'un connecteur électrique conforme aux enseignements de l'invention ;
- la figure 2 est une vue en perspective de dessous du connecteur de la figure 1 ;
- la figure 3 est une vue en perspective similaire à celle de la figure 2 sur laquelle les principaux composants du connecteur sont représentés de manière éclatée ;
- la figure 4 est une vue en élévation de dessous et à grande échelle du connecteur de la figure 2 ;
- la figure 5 est une vue en section selon la ligne 5-5 de la figure 4 ;
- la figure 6 est une vue en perspective qui illustre la face principale du levier qui porte la barre de commande des lames de contact électrique ;
- la figure 7 est une vue latérale du levier qui porte la barre de raccordement ;
- la figure 8 est une vue de dessous de la figure 7 ;
- la figure 9 est une vue latérale de droite de la figure 8 ;
- la figure 10 est une vue en perspective de dessus de l'organe unique en forme de bascule pour la commande des déplacements et le rappel élastique de la barre de commande ;
- la figure 11 est une vue en perspective de dessous de l'organe unique illustré à la figure 10 ;
- la figure 12 est une vue latérale de l'organe unique ;
- la figure 13 est une vue en perspective de dessous du socle nu du connecteur seulement équipé d'un commutateur de fin de course ;
- les figures 14 et 15 sont deux vues similaires à celle de la figure 13 qui illustrent, en deux étapes, la mise en place du levier qui porte la barre de commande sur le socle ;
- les figures 16 et 17 sont deux vues similaires à celle de la figure 15 qui illustrent les deux étapes de mise en place des lames de contact électrique par insertion ;
- la figure 17A est une vue à plus grande échelle en section selon la ligne A-A de la figure 17 ;
- les figures 18 et 19 sont des vues similaires à celle de la figure 17 qui illustrent les deux étapes de mise en place de la bascule métallique constituant l'organe unique illustré aux figures 10 à 12 ;
- la figure 20 est une vue similaire à celle de la figure 19 qui illustre la mise en place du capot sur le socle du connecteur ;
- la figure 21 est une vue en section selon la ligne 21-21 de la figure 4 ;
- la figure 22 est une vue similaire à celle de la figure 21 sur laquelle une carte est illustrée en position partiellement introduite dans le connecteur au moment où son bord transversal avant vient en contact avec les surfaces de came des pattes d'actionnement ;
- la figure 23 est une vue similaire à celle de la figure 22 sur laquelle la carte est illustrée en position introduite ;
- les figures 24 à 26 sont des vues similaires à celles des figures 21 à 23, prises en section selon la ligne 24-24 de la figure 4 ;
- la figure 27 est une vue similaire à celle de la figure 3 qui illustre une variante de réalisation du levier et de la bascule de commande ;
- la figure 27A est une vue à plus grande échelle du détail A de la figure 27 ;
- la figure 28 est une vue similaire à celle de la figure 10 qui illustre la variante de réalisation de la figure 27 ;
- la figure 28A est une vue à plus grande échelle du détail A de la figure 28 ;
- la figure 29 est une vue à plus grande échelle qui illustre la variante de réalisation du levier ;
- la figure 30 est une vue en perspective de dessus du socle porte-contacts qui illustre une variante de ce dernier comportant notamment des moyens de freinage de la carte ;
- la figure 31 est une vue à plus grande échelle d'un détail de la partie centrale de la figure 25 qui illustre une variante de réalisation de la partie de la barre de commande 114 qui coopère avec les becs 102 d'extrémité libre des lames de contact 96.

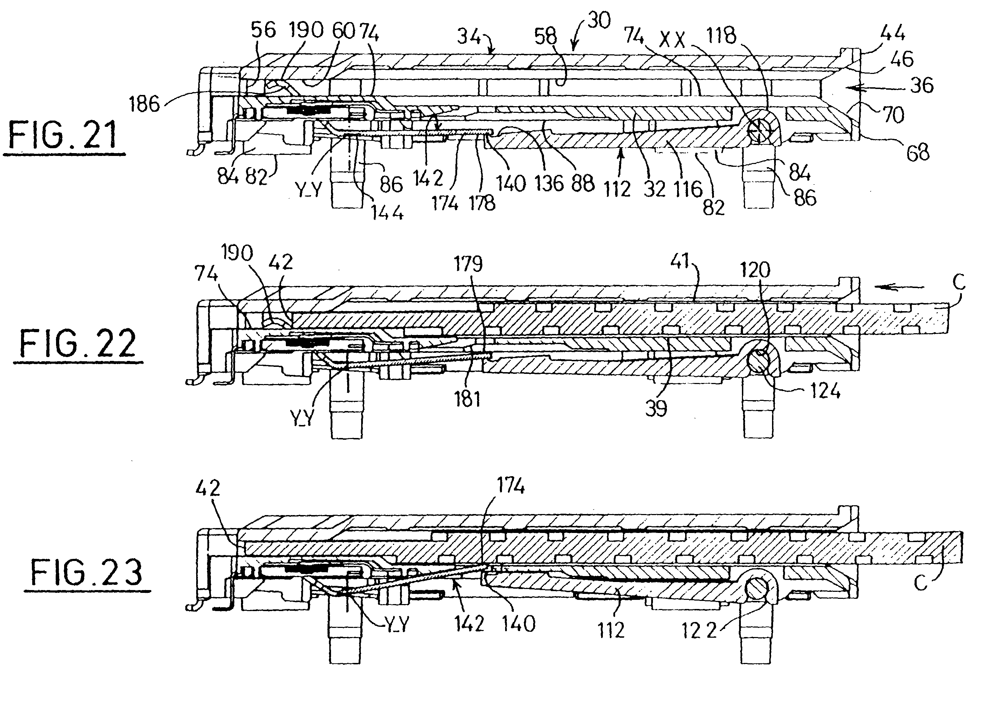

Dans la description qui va suivre, ainsi que dans les revendications, les termes "horizontal", "vertical", "supérieur", "inférieur", etc. sont utilisés, notamment en référence aux figures 21 à 26, pour simplifier les explications et ne constituent en aucune manière une limitation de l'invention.

On a représenté sur les figures un connecteur électrique 30 qui est constitué pour l'essentiel par un socle ou support porte-contacts 32 en matériau isolant et par un capot supérieur 34.

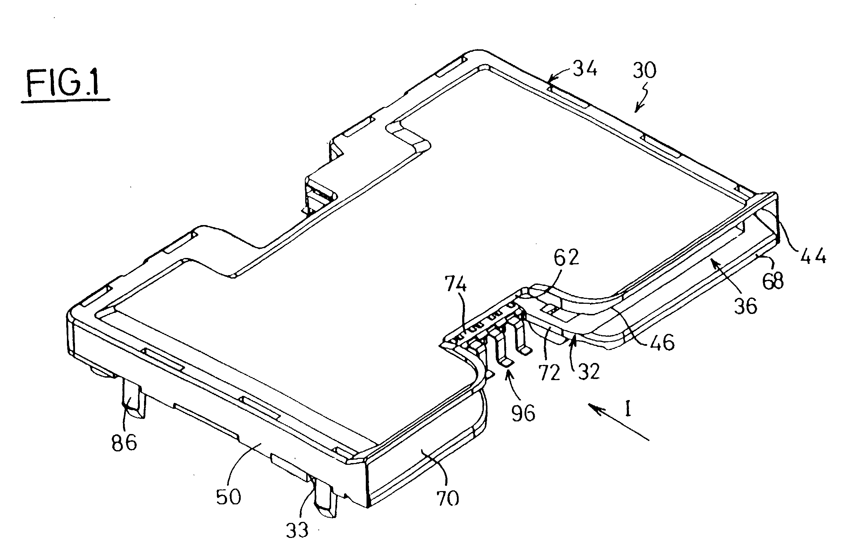

Le connecteur 30 est de forme générale parallélépipédique rectangle et il comporte à son extrémité avant, à droite en considérant la figure 1, une fente 36 pour l'introduction longitudinale d'une carte C (voir figures 21 à 26) de forme générale rectangulaire plane, dont un modèle ou gabarit est partiellement illustré aux figures 22, 23 et 25, 26, qui est délimitée par deux faces planes principales inférieure 38 et supérieure 40, ainsi que par un bord transversal avant 42 qui s'étend perpendiculairement à la direction I d'introduction de la carte C dans la fente 36 du connecteur 30.

Le capot 34 est une pièce moulée en matière plastique en forme générale de plaque rectangulaire dont le bord transversal avant 44 comporte un chanfrein 46 facilitant l'introduction de la carte C dans la fente 36 qui est délimitée latéralement dans le capot 34 par les faces internes en vis-à-vis 48 des joues latérales 50 du capot 34 qui coopèrent avec les bords longitudinaux opposés de la carte C pour la guider en coulissement selon la direction I.

Au voisinage du bord transversal 52 d'extrémité arrière du capot 34, ce dernier comporte, dans sa face interne 54, deux butées 56, transversalement opposées, avec lesquelles coopère le bord avant 42 de la carte C pour déterminer la position introduite de la carte C dans le connecteur 32.

La carte C est guidée verticalement vers le haut lors de son introduction dans le connecteur 30 par coopération de sa face supérieure 40 avec des zones d'appui 58 formées sur deux nervures centrales en relief dans la face interne du capot 34 ainsi que par un plan d'appui coplanaire 60 formé au voisinage des butées 56.

Afin d'éviter de rayer la face en vis-à-vis de la carte C, chaque nervure d'appui 58 peut être remplacée par deux bossages profilés et agencés consécutivement selon la direction longitudinale. Cette solution permet de plus une économie de matière.

Le bord transversal avant 44 du capot 34 comporte un évidement ou dégagement central 62 qui facilite les opérations de raccordement par soudage des pattes de raccordement des lames de contact et il permet d'utiliser des contacts courts.

Les bords inférieurs des joues latérales 50 et de la paroi verticale de fond 64 comportent une série de crochets 66 pour la fixation du capot 44 sur le socle 32.

Le socle 32 est une pièce moulée en matière plastique isolant en forme générale de plaque rectangulaire évidée.

Il est délimité longitudinalement par un bord transversal avant 68 qui comporte un chanfrein 70 et un évidement 72 dont les fonctions sont identiques à celles du chanfrein 46 et de l'évidement 62.

La face supérieure 74 du socle 32 est une surface plane parallèle aux surfaces 58 et 60 du capot 34 qui délimite avec ces dernières verticalement vers le bas et vers le haut la fente 36 d'introduction de la carte C dont la face inférieure 38 coopère avec la face plane supérieure 74 du socle 32 lors de son introduction.

Aux figures 21 à 26, le connecteur est représenté dans une position telle que la face 38 de la carte C qui porte les plots ou plages de raccordement est orientée vers le bas, mais dans de très nombreuses applications le connecteur occupe une position inverse, c'est à dire que le socle est en haut et que la face 38 de la carte qui porte la puce est alors la face supérieure orientée verticalement vers le haut. Dans cette position, la carte a naturellement tendance à reposer par sa face 40 sur les nervures du capot 34.

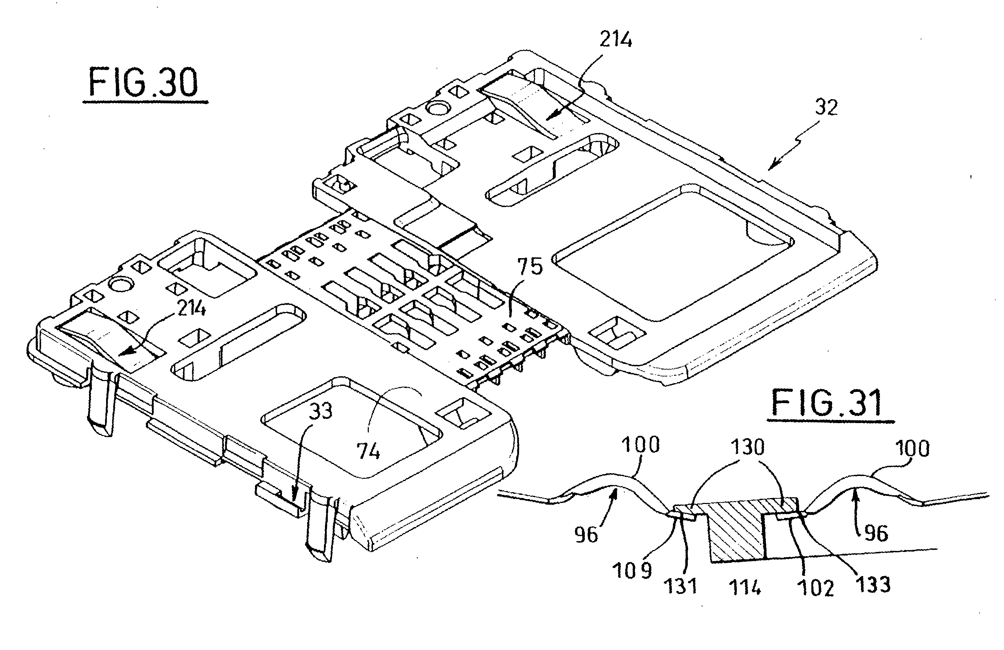

Dans les cas où les plages ou plots de la puce de la carte sont légèrement en saillie par rapport à la face inférieure de la carte, et afin d'éviter de les endommager lors de l'introduction de la carte, il est possible de prévoir dans la face supérieure 74 du socle une rainure 75 (voir figure 30) d'environ un dixième de millimètre de profondeur et ceci au niveau des contacts, c'est à dire sur toute la longueur de la partie centrale du socle en regard de la zone correspondante du capot qui s'étend entre les nervures 58.

Les bords inférieurs des faces latérales 78 et de la face transversale arrière 76 du socle 32 comportent des zones 80 avec lesquelles coopèrent les becs des crochets 66 du capot 34 dont la position verticale par rapport au socle 32 est déterminée par la venue en appui des bords inférieurs 67 (entre les crochets 66) du capot 34 sur des facettes supérieures d'appui 81 situées entre les zones d'accrochage 80.

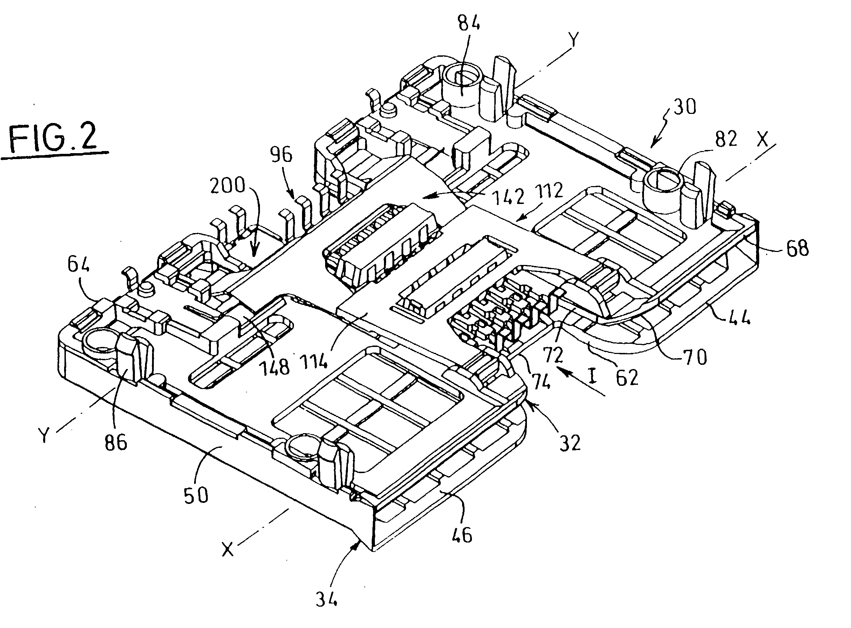

En position assemblée, et comme on peut le voir notamment aux figures 1 et 2, le socle 32 et le capot 34 constituent un ensemble en forme de boîtier rectangulaire.

Le socle 32 est par exemple prévu pour être fixé sur une plaque à circuit imprimé (non représentée sur les figures) sur laquelle il prend appui verticalement par les bords inférieurs annulaires 82 de quatre pieds cylindriques 84 qui s'étendent verticalement vers le bas en dessous du socle 32, la face inférieure de ce dernier comportant aussi, au voisinage des pieds 84, quatre paires de harpons 86 prévus pour assurer l'accrochage vertical du socle 32 sur la plaque à circuit imprimé.

Selon un autre agencement, le socle peut être monté par les mêmes harpons 96 sur une simple plaque de support et les pattes de raccordement des contacts sont reliées à l'électronique de l'équipement par un circuit souple.

Les pieds 84 s'étendent verticalement à partir de la face inférieure 88 du socle 32 de manière à délimiter entre cette dernière et la face supérieure de la plaque à circuit imprimé un espace, sensiblement sur toute l'aire du connecteur, dans lequel peuvent s'étendre des composants électroniques fixés sur la plaque à circuit imprimé ainsi que des parties formées en relief sur la face inférieure 88 ou des éléments du connecteur rapportés sur cette face inférieure.

Dans sa portion centrale 90 de longueur réduite délimitée par deux bords transversaux avant 92 et arrière 94, le socle 32 constitue un support pour deux séries de contacts électriques 96 dont chacune comporte ici quatre contacts.

Chaque contact électrique 96 est, selon une conception connue, une lame déformable élastiquement qui comporte un tronçon central 98 d'orientation longitudinale qui se termine à l'une de ses extrémités libres, orientées vers le centre du connecteur, par une portion incurvée 100 de contact dont la convexité est tournée verticalement vers le haut et qui se prolonge elle-même par un bec d'extrémité 102. Chaque tronçon central 98 est relié à son autre extrémité par une partie 104 de fixation par insertion comportant notamment un harpon 106.

Chaque contact 96 se prolonge longitudinaiement au delà de sa portion de fixation 104 par une extrémité de raccordement 108 en forme de patte qui est prévue pour être raccordée par soudage ou par brasage avec des pistes conductrices de la face supérieure de la plaque à circuit imprimé.

Selon une variante connue, les contacts peuvent être du type à piquer dans des trous de la plaque à circuit imprimé.

Les lames de contact 96 sont déformables élastiquement, c'est-à-dire que leur partie d'extrémité libre 100, 102 peut fléchir verticalement par rapport à leur partie de fixation 104.

Dans leur état de repos non fléchi, les extrémités incurvées 100 des contacts 96 font normalement saillie verticalement au dessus du plan de la face supérieure 74 du socle 32, contre laquelle coulisse la face inférieure 38 de la carte C, à travers des ouvertures 110 formées à cet effet dans la partie centrale 90 porte-contacts du socle 32.

Pour la conception détaillée des contacts et notamment pour leur mode de fixation par insertion, on pourra notamment se reporter au contenu du document WO-A-FR9401532.

Selon un principe connu du document EP-B1-0.468.828, et afin de constituer un connecteur du type à atterrissage des contacts 96, le connecteur 30 est muni d'un levier pivotant 112 qui porte une barre 114 de commande des extrémités 100 de contact des lames 96.

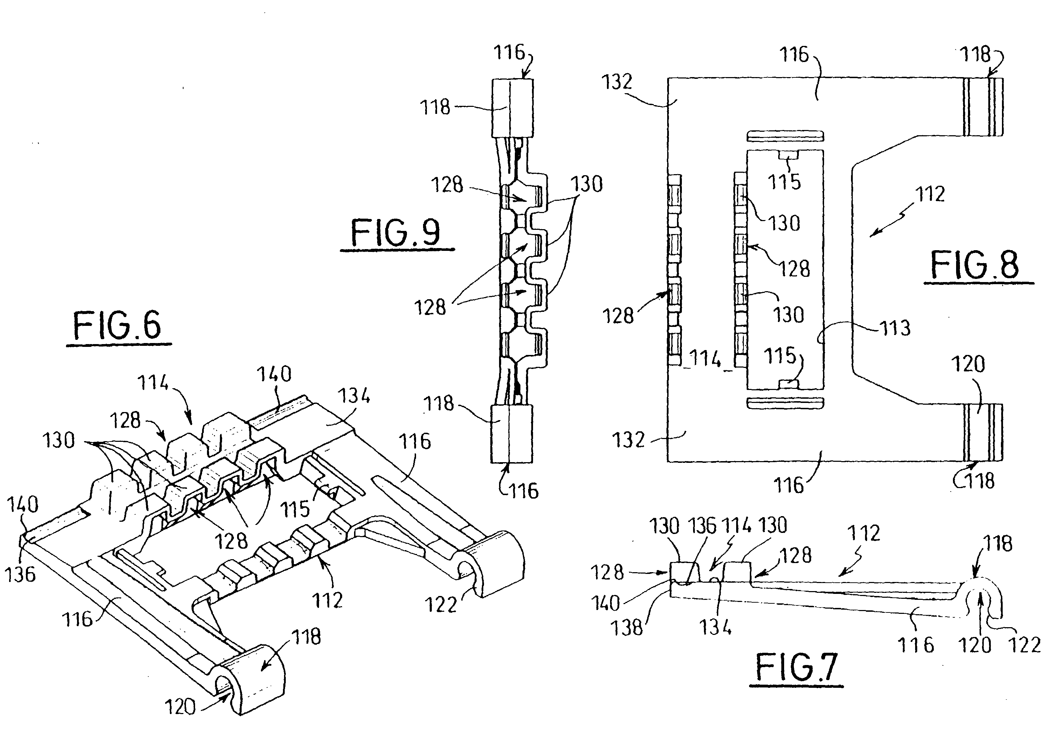

Comme on peut le voir plus particulièrement sur les figures 6 à 9, le levier 112 présente une forme générale de U dont les branches sont constituées par deux longerons 116 qui sont reliées au voisinage de leurs extrémités longitudinales arrière par la barre transversale de commande 114.

L'extrémité longitudinale arrière 118 de chaque longeron 116 est conformée en un palier semi-cylindrique d'articulation 120 qui débouche dans la face inférieure du levier 112 par une fente radiale 122 qui permet l'introduction dans le palier 120, par emboîtement élastique, d'un tronçon correspondant d'axe d'articulation 124 qui est réalisé venu de matière par moulage avec le socle 32 et qui s'étend sous la face 88 de ce dernier entre deux joues verticales 126 d'orientation longitudinale.

Le levier 112 est ainsi monté pivotant par rapport au socle 32 autour de l'axe géométrique transversal X-X des tronçons 124.

La barre de commande 114 comporte, dans sa partie centrale, deux séries de quatre réceptacles 128 dont chacun est délimité verticalement vers le haut par des cloisons supérieures 130 et dont chacun est ouvert longitudinalement vers l'arrière ou vers l'avant de manière à recevoir chacun un bec 102 d'une extrémité de contact d'une lame de contact 96.

Chaque réceptacle 128 est aussi ouvert verticalement vers le bas.

A son extrémité longitudinale arrière 132, et dans sa face supérieure 134, chaque longeron 116 comporte une rainure longitudinale 136 qui délimite, au bord d'extrémité arrière 138, une nervure 140.

Les deux nervures 140, qui sont agencées transversalement aux extrémités opposées de la barre 114, de part et d'autre de sa portion centrale de commande des contacts 96, constituent deux surfaces de commande des mouvements de pivotement du levier 112 autour de son axe X-X, comme cela sera expliqué par la suite.

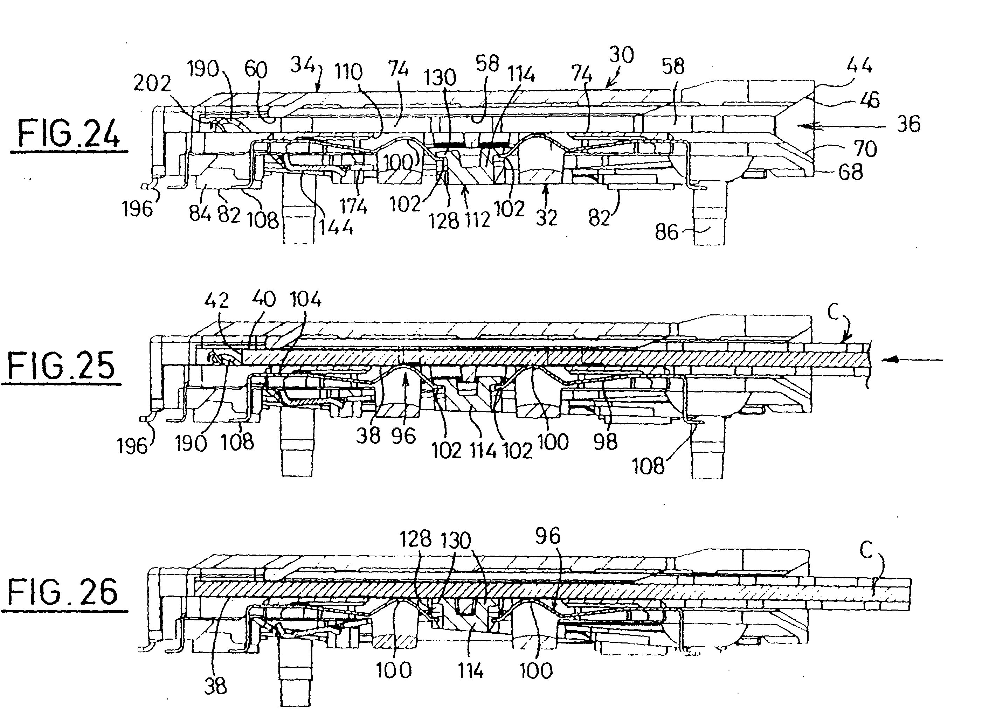

On décrira maintenant l'organe unique 142 qui, conformément aux enseignements de l'invention, constitue un organe unique d'actionnement du levier 112 et de rappel élastique de ce dernier vers sa position en retrait, illustrée par exemple aux figures 21 et 24, dans laquelle les extrémités incurvées de contact 100 des lames 96 sont effacées verticalement en deçà de la face supérieure 74 du socle 32, à l'encontre de leur élasticité propre.

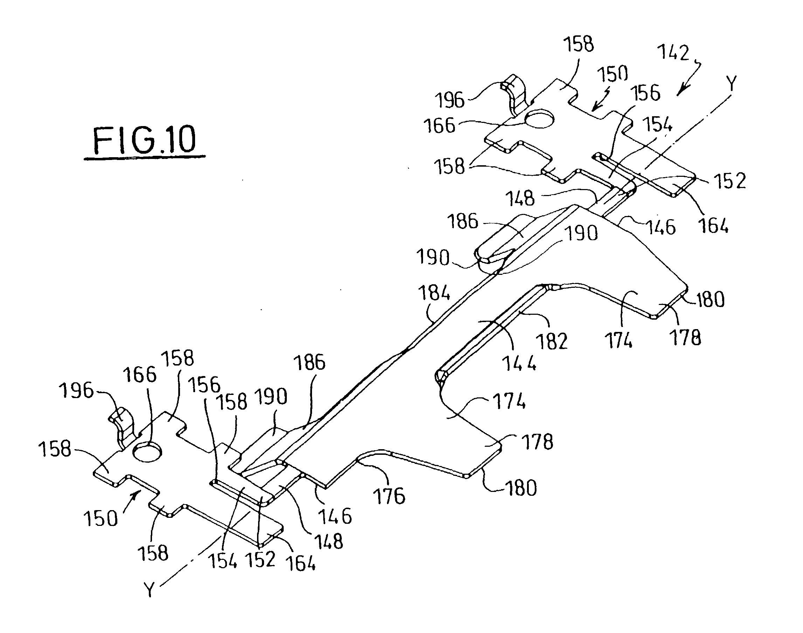

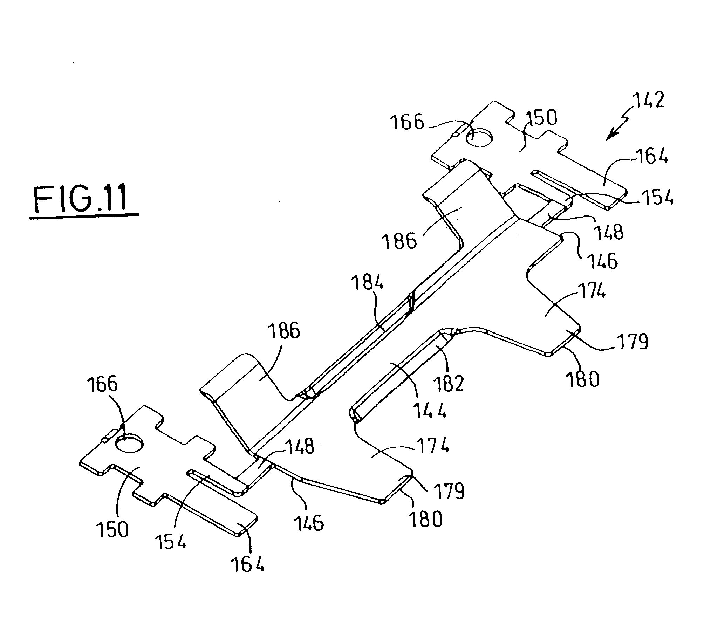

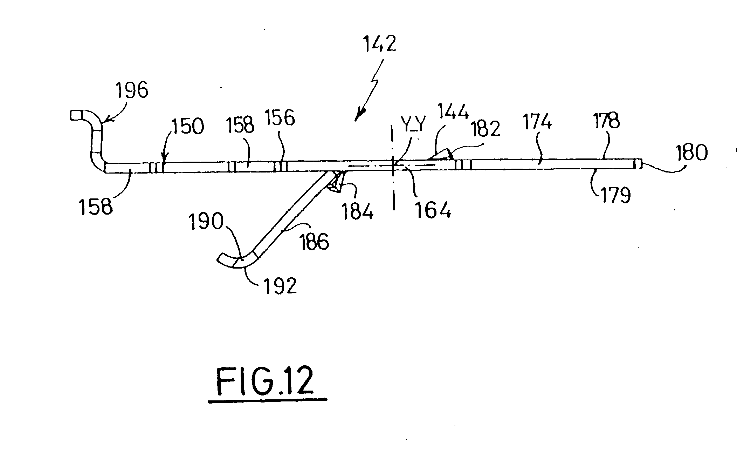

Comme on peut le voir notamment aux figures 10 à 12, l'organe unique 142, qui sera par la suite appelé bascule, est réalisé en une seule pièce en tôle métallique conformée par découpe et pliage.

La bascule 142 présente approximativement une symétrie générale de conception par rapport au plan vertical médian du connecteur, de la même manière que le levier 112 et la partie centrale 90 du socle 32 formant support des contacts 96.

La bascule 142 comporte une traverse centrale 144 en forme de plaque et orientée sensiblement horizontalement dans le connecteur 32 lorsqu'elle est dans sa première position angulaire.

La partie centrale constituée par la traverse 144 est "suspendue" sous la face inférieure 88 du socle 32.

A cet effet, la traverse 144 se prolonge, à chacune de ses deux extrémités transversales opposées 146, par une languette 148 qui s'étend transversalement vers l'extérieur dans un plan parallèle à celui de la traverse 144.

Chaque languette 148 est une languette de liaison entre la traverse 144 et deux plaques latérales 150 de fixation de la bascule 142 sous la face inférieure 88 du socle 32, les languettes 148 constituant aussi, comme cela sera expliqué par la suite, un axe de rotation ou de basculement de la traverse 144 ainsi que des barres élastiques de torsion

Au voisinage de son extrémité transversale 152, chaque languette 148 est reliée à la plaque de fixation 150 par une poutre longitudinale de liaison 154 qui s'étend d'avant en arrière jusqu'au bord transversal avant 156 de la plaque 150.

Les plaques de fixation 150, les poutres longitudinales 154 et les languettes 148 s'étendent toutes sensiblement dans le même plan que la traverse 144 lorsque la bascule 142 n'est pas déformée élastiquement, c'est-à-dire telle qu'elle est illustrée aux figures 10 à 12. Cette conception simplifie les opérations de découpe de la bascule dans une feuille métallique et garantie une très grande précision dimensionnelle de la pièce.

Les poutres 154 en association avec les languettes 148 permettent d'augmenter l'ampleur des mouvements de basculement et ainsi de réduire l'encombrement de la bascule 142 selon l'axe Y-Y.

Les poutres 154 constituent une transition élastique, car elles sont déformables élastiquement en flexion, entre les languettes 148 formant barres de torsion et les plaques rigides et fixes 150. Cette transition élastique diminue le taux de contraintes à l'extrémité des barres 148 et elle contribue à la rotation élastique de la traverse 144.

La légère translation verticale de la traverse 144 résultant de la transition élastique due aux poutres 154, qui serait normalement nuisible au bon fonctionnement de la bascule 142, est du second ordre et elle peut donc être négligée et l'on peut considérer que la traverse 144 bascule autour de l'axe Y-Y.

Chacune des plaques de fixation 150 est de contour général rectangulaire et elle comporte quatre pattes transversales coplanaires 158 pour son montage du type à baïonnette dans quatre logements ou encoches complémentaires 160 formées au dessus d'une zone plane inférieure 162 d'appui et de fixation pour une plaque 150.

Le montage du type à baïonnette s'effectue en introduisant longitudinalement, d'arrière en avant, les pattes 158 dans les encoches 160.

L'appui des plaques 150 est complété par la coopération de deux lames coplanaires 164 qui s'étendent longitudinalement vers l'avant à partir des bords 156 des plaques 150 et dont chacune est prévue pour s'étendre en regard et en appui contre une surface complémentaire 165 du socle 32 adjacente à la surface 162.

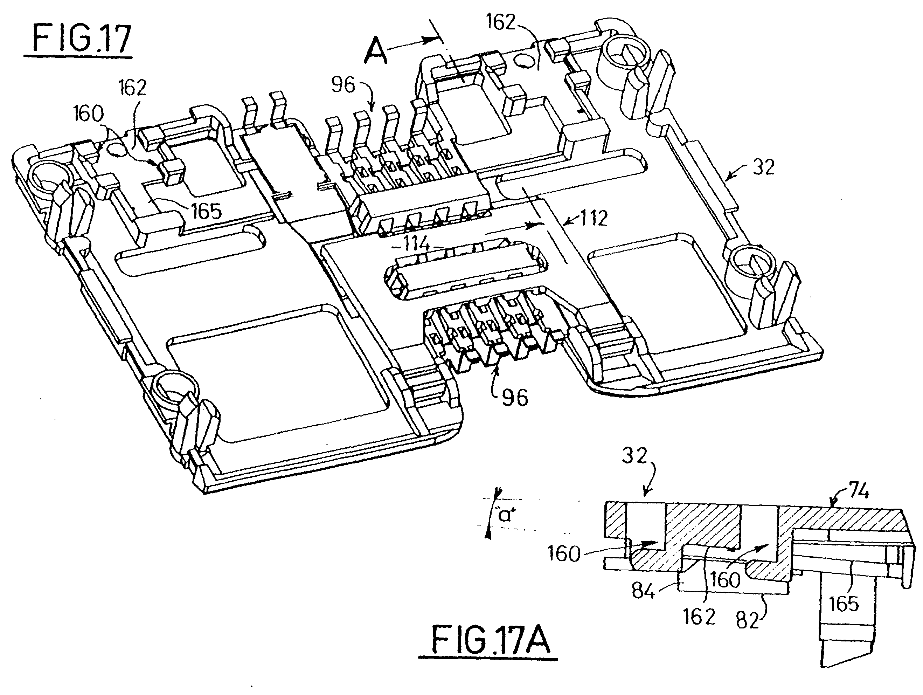

Comme on peut le voir sur le détail illustré à la figure 17A, les surfaces 162 et 164 ne sont pas horizontales, c'est à dire qu'elles ne sont pas parallèles au plan général de la face supérieure 74 du socle.

En position montée, le plan général de la bascule 142 est ainsi incliné en formant un angle aigu "a" d'environ 4° sous la face inférieure 32 du socle de manière à, comme cela sera expliqué per la suite, établir un état d'équilibre de la bascule 142 dans lequel les barres de torsion sont précontraintes lorsque la bascule est dans sa première position angulaire.

Chacune des plaques de fixation 150 comporte aussi un trou 166 qui est prévu pour venir en regard d'un trou débouchant complémentaire 168 formé dans le socle 32, ces trous alignés 166, 168 étant prévus pour recevoir des doigts 170 qui s'étendent verticalement à partir de la face interne 54 du capot 34, lorsque le capot 34 est fixé sur le socle 32.

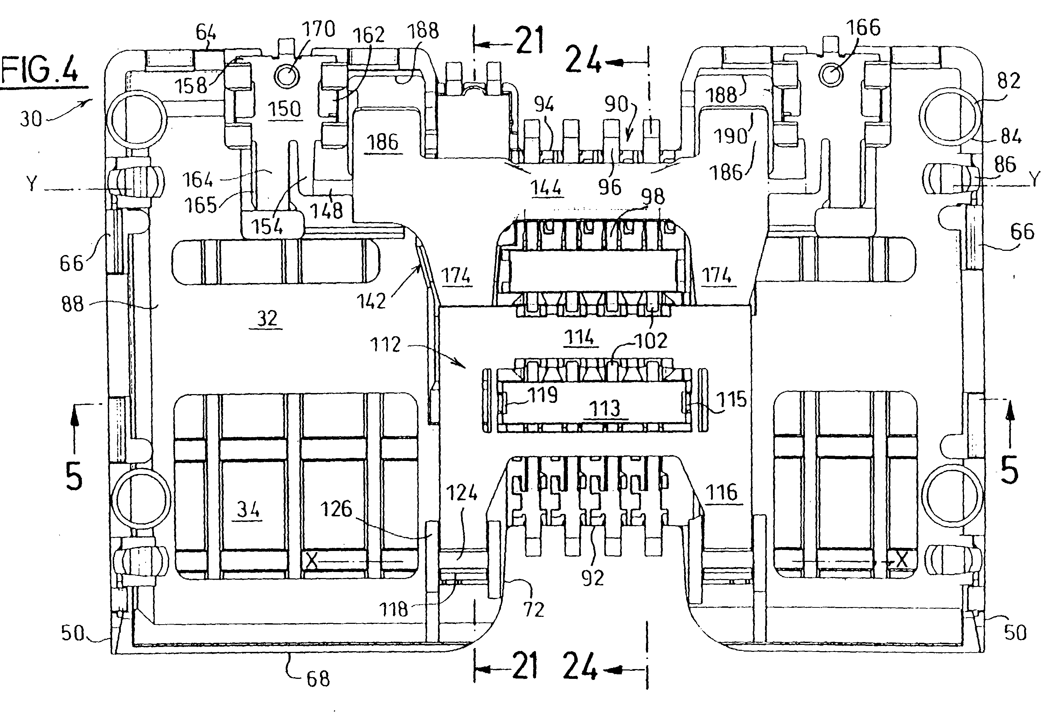

En position montée de la bascule 142 sous le socle 32, et comme on peut le voir notamment aux figures 2, 4 et 19, la bascule 142 est fixée par ses plaques 150 sous la face inférieure du socle 32 et sa partie centrale principale, constituée notamment par la traverse 144, peut basculer autour d'un axe géométrique de rotation Y-Y correspondant sensiblement aux languettes 148.

Les mouvements de basculement s'effectuent à l'encontre de l'effort de rappel élastique de la bascule 142 qui lui est appliqué par les languettes 148 constituant deux barres de torsion qui rappellent élastiquement la traverse 144.

Pour agir sur le levier 112, et plus particulièrement sur les surfaces de commande 140 formées aux extrémités longitudinales arrière 138 des longerons 116, la bascule 142 comporte deux bras de commande 174 parallèles et transversalement opposés dont chacun s'étend, de manière coplanaire, à partir du bord transversal avant 176 de la traverse 144.

En position assemblée des différents composants du connecteur, et comme on peut le voir notamment aux figures 21 à 23, la face inférieure 178 de chacune des extrémités longitudinales arrière 180 des bras de commande 174 est en appui vertical contre une surface 140.

Les bras de commande 174 forment avec la traverse 144 un ensemble rigide, c'est-à-dire qu'ils ne peuvent pas fléchir verticalement par rapport au plan de la traverse 144, cette rigidité étant accrue par une nervure 182 formée entre les bras 174 dans le bord transversal avant de la traverse 144.

Le bord transversal arrière de la traverse 144 comporte aussi une nervure de renfort 184 qui s'étend longitudinalement entre deux pattes 186 d'actionnement de la bascule 142 par la carte C, la nervure 184 pouvant à titre de variante s'étendre sur toute la largeur transversale de la traverse entre les pattes 186.

Chaque patte d'actionnement 186 s'étend longitudinalement vers l'arrière à partir de la traverse 144 en formant avec le plan général de cette dernière et des bras de commande 174 un angle d'environ 45°, les pattes d'actionnement 186 s'étendant ainsi vers l'arrière et verticalement vers le haut, chacune à travers un trou débouchant 188 formé dans le socle 32 de manière que l'extrémité libre incurvée 190 de chaque patte d'actionnement 186 s'étende en saillie verticalement au dessus de la face supérieure 74 du socle 32 à l'intérieur de la fente 36, comme cela est notamment illustré aux figures 21, 22 et 24, 25 et ceci tant que la carte C n'est pas entièrement introduite dans le connecteur 30.

Afin d'améliorer encore les performances et la fiabilité du connecteur, il est possible de munir chaque patte d'actionnement 186 d'une nervure longitudinale de renfort (non représentée) dans la zone de son raccordement coudé à la traverse 144.

La face supérieure convexe 192 de l'extrémité incurvée 190 de chaque patte constitue un profil de came avec lequel le bord transversal avant 42 de la carte C coopère en fin de phase d'introduction de la carte C dans le connecteur 30.

Comme les bras de commande 174, les pattes d'actionnement 186 font avec la traverse 144 un ensemble rigide qui ne se déforme pas sous l'action de la carte C, cet ensemble étant susceptible de basculer autour de l'axe Y-Y par déformation des barres de torsion 148 et des poutres 154.

La bascule 142, qui est une pièce métallique de qualité "ressort", comporte deux pattes 196 de raccordement des plaques de fixation 150 au circuit de masse (non représenté) de la plaque à circuit imprimé, les pattes de raccordement 196 étant soudées sur la plaque à circuit imprimé en même temps que les pattes 108 de raccordement électrique des contacts 96.

En position assemblée des composants constitutifs du connecteur, la face supérieure 179 de chacun des bras de commande 174 s'étend en regard d'une surface de butée 181 formée en vis-à-vis dans la face inférieure du socle 32.

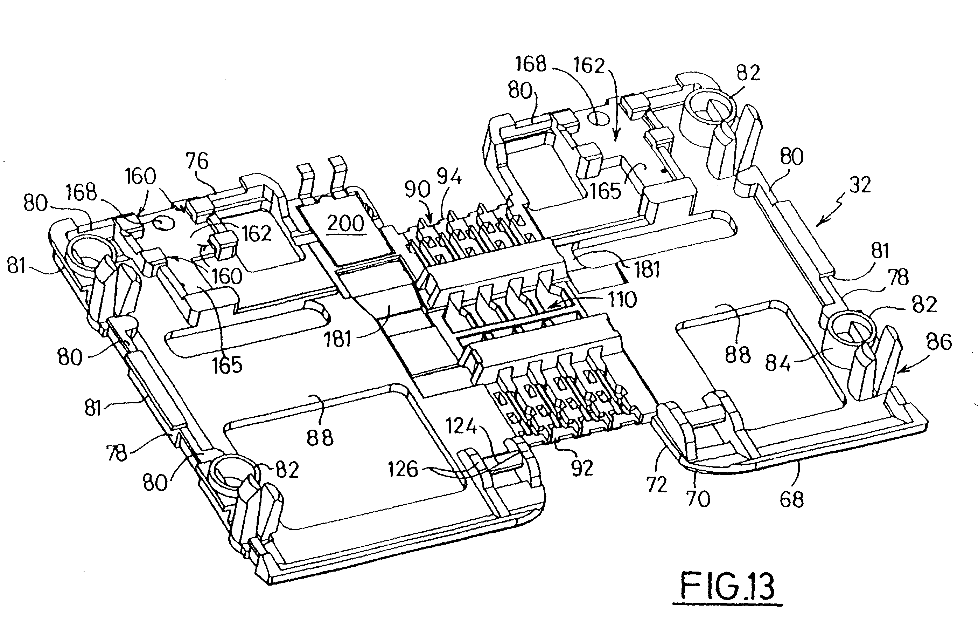

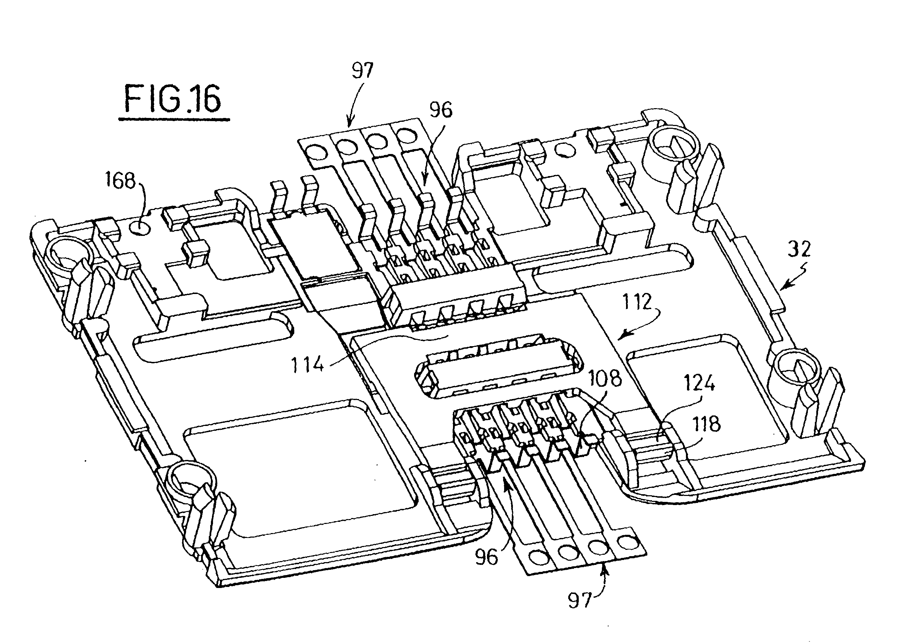

On décrira maintenant l'assemblage des différents composants en vue de la réalisation d'un connecteur 30, notamment en référence aux figures 13 à 20.

En prenant comme élément de référence un socle 32 tel qu'illustré à la figure 13 sur lequel on commence par fixer un commutateur 200 de détection de la présence d'une carte C en position introduite, qui ne sera pas ici décrite plus en détails, mais dont on voit sur les figures 24 à 26 le levier 202 de déclenchement qui coopère avec le bord transversal avant 42 de la carte selon une séquence telle que, en fin d'introduction de la carte C dans le connecteur, son bord transversal agit sur le commutateur pour garantir son changement d'état environ 0,8 mm avant la venue en butée de la carte et inversement lors de l'extraction.

Les opérations d'assemblage des différents composants se poursuivent par le montage du levier 112.

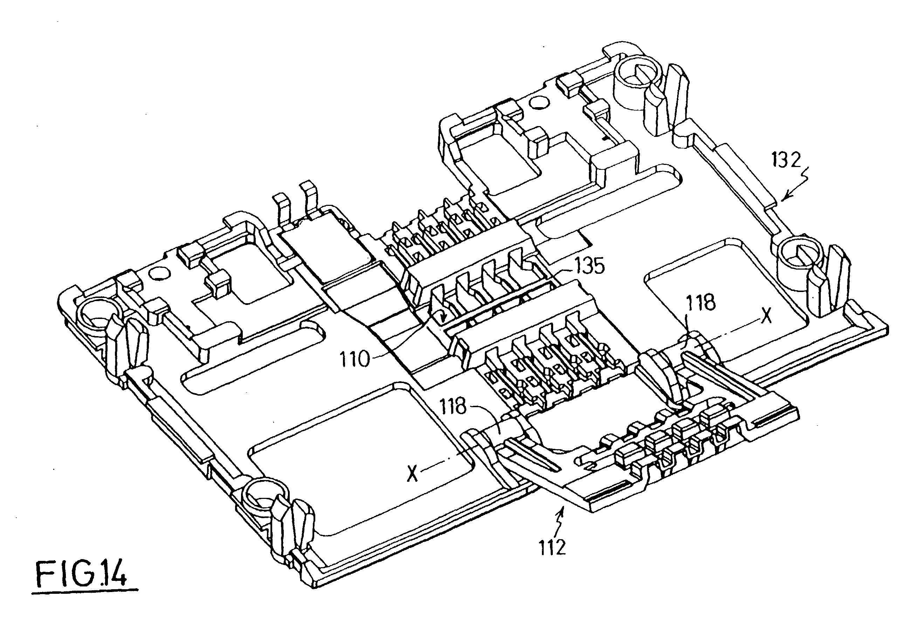

A cet effet, comme cela est illustré sur la figure 14, les paliers 118 sont emboîtés élastiquement autour des tronçons 124 d'axe d'articulation de manière à assurer le montage pivotant du levier 112 autour de l'axe X-X.

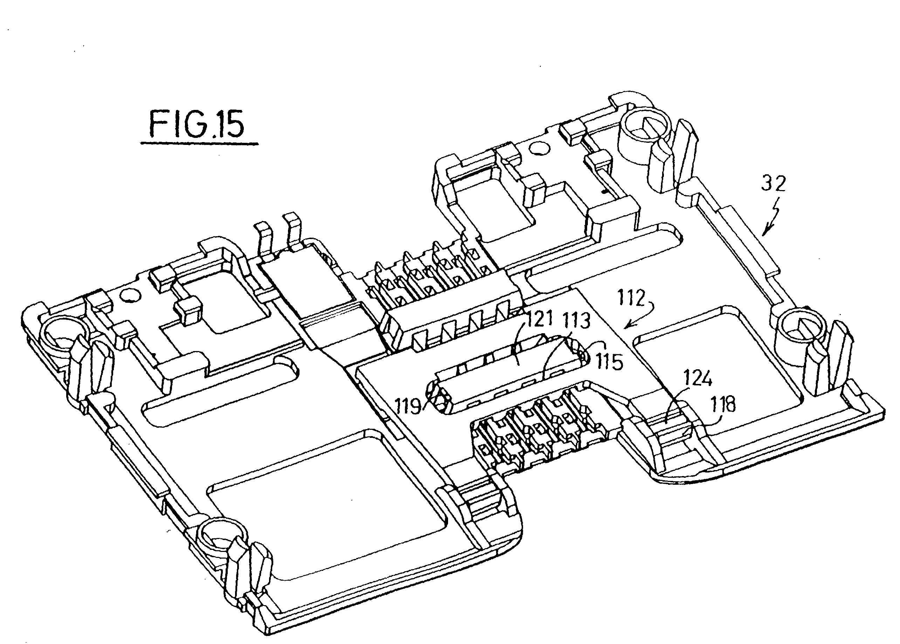

A partir de la position d'emboîtement illustrée à la figure 14, on fait ensuite pivoter le levier 112 jusqu'à atteindre sa position illustrée à la figure 15 dans laquelle la portion de la face 134 de la barre de commande 114, située entre les deux séries de quatre réceptacles 128, est en appui contre la traverse 135 du socle 32 située entre les alvéoles 110 (voir figure 14).

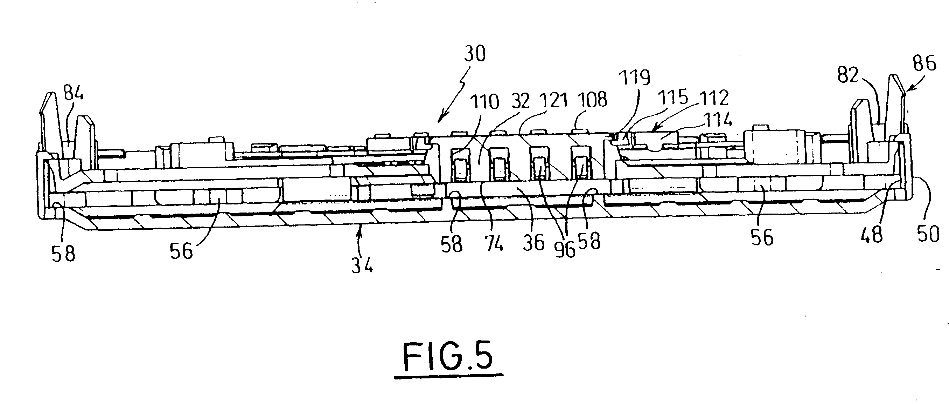

Après avoir fait pivoter le levier 112 dans sa position illustrée à la figure 15, ses possibilités de pivotement autour de l'axe X-X sont limitées dans la mesure où la fente centrale 113 comporte à ses extrémités transversales opposées deux becs 115 de retenue qui s'étendent en regard de deux lèvres de butée 119 formées en vis-à-vis sur le coffrage en relief 121 (voir figures 5 et 15), les becs 115 s'effaçant élastiquement lors du montage grâce à la déformation élastique des parties en forme de lames qui les portent.

On introduit ensuite, par insertion longitudinale dans les deux sens, les deux groupes de quatre contacts 96, chacune des séries de quatre lames étant reliées entre elles par des rives 97 pour faciliter l'insertion simultanée des contacts quatre par quatre.

Au cours de cette insertion, les becs d'extrémité libre 102 des contacts 96 pénètrent chacun dans un réceptacle en vis-à-vis 128 de la barre de commande 114 du levier 112 de manière à s'étendre en regard d'une cloison supérieure 130 du réceptacle correspondant.

Après insertion des contacts 96, on coupe ensuite les rives 97 reliant les lames 96 pour aboutir à la conformation illustrée à la figure 17.

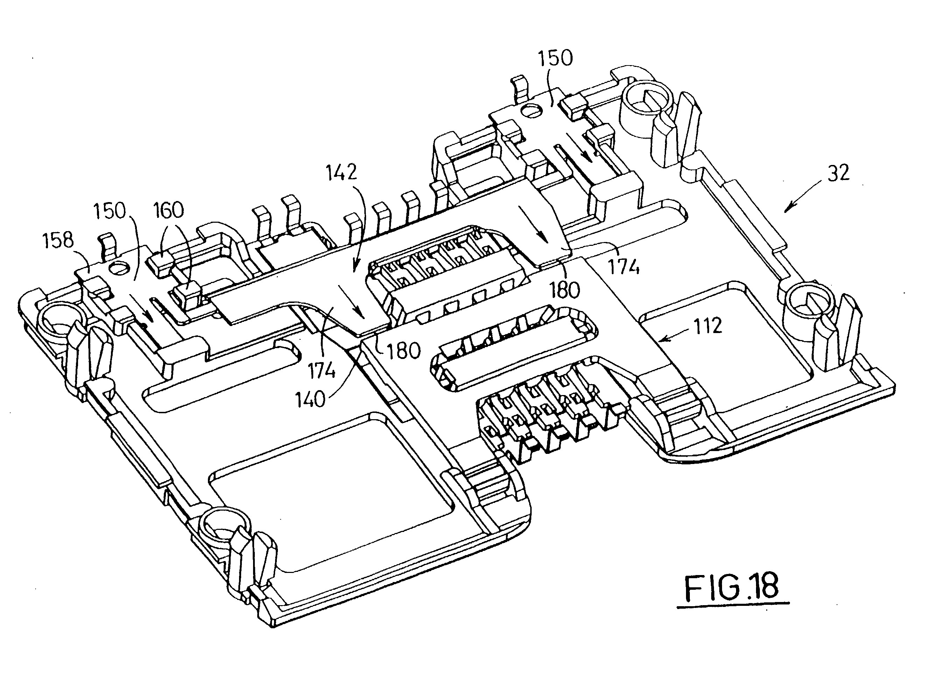

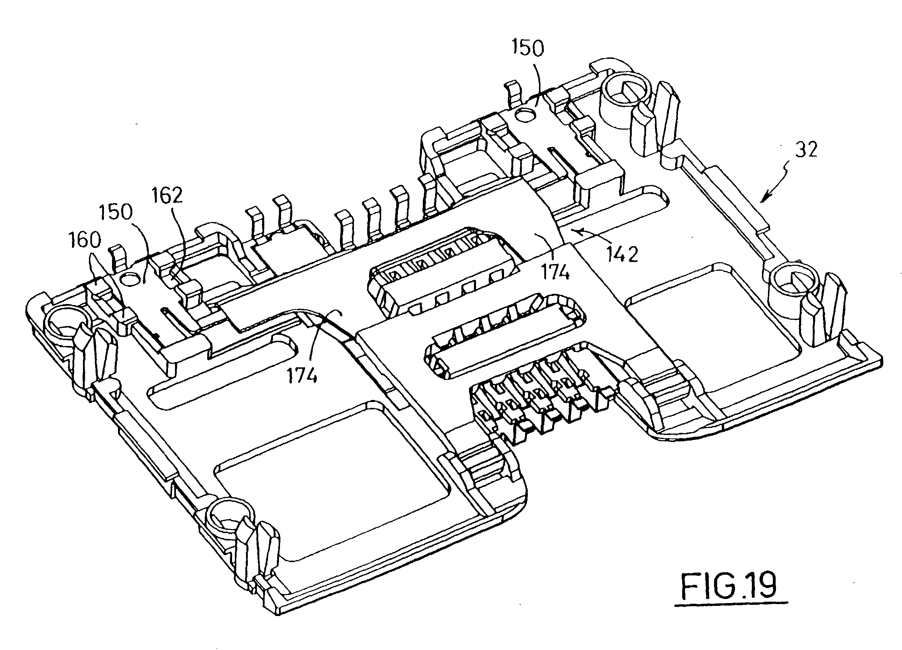

L'étape suivante, illustrée en deux phases consécutives aux figures 18 et 19, consiste à mettre en place la bascule 142.

Pour ce faire, comme cela est illustré à la figure 18, après avoir agit sur la barre de commande 114 pour la repousser verticalement vers le bas on introduit les extrémités libres 180 des bras de commande de la bascule 142 sous les surfaces de commande 140 et on amène les plaques 150 en appui sur les surfaces d'appui 162, selon un mouvement vertical de haut en bas en considérant la figure 18, puis on insère les pattes 158 longitudinalement d'arrière en avant dans les réceptacles 160 pour aboutir à la position illustrée à la figure 19 dans laquelle la bascule 142 est fixée verticalement, c'est-à-dire que les plaques 150 sont fixées en appui sur les surfaces 162 et sont en butée longitudinale vers l'avant du fait de la coopération des bords transversaux avant des pattes 158 avec les fonds des réceptacles 160.

Puis on relâche l'effort exercé sur le levier 112 et la barre de commande 114. Au cours de ce mouvement, les barres de torsion sont sollicitées en rotation à l'encontre de leur élasticité propre car les extrémités longitudinales avant 180 des bras de commande 174 sont sollicitées par les surfaces de commande 140 formées dans les extrémités longitudinales des longerons du levier 112.

Les dimensions et les formes des différents composants, et notamment l'altitude du plan dans lequel s'étendent les bras de commande 174, sont telles que le levier 112 est sollicité en rotation dans le sens anti-horaire, en considérant les figures 21 et 24, autour de son axe X-X de pivotement, et à l'encontre de l'élasticité propre des lames de contact 96 pour occuper sa position dite en retrait dans laquelle la barre de commande 114 sollicite les becs d'extrémité 102 verticalement vers le bas (en considérant les figures 21 et 24) pour déformer élastiquement les lames de contact 96 pour effacer ou escamoter les extrémités incurvées de contact 100 en deçà de la face supérieure 74 du socle porte-contacts 32.

Dans cette première position angulaire d'équilibre de la bascule 142 et de la barre de commande 114, qui est notamment illustrée aux figures 21 et 24, les contacts ne font donc pas saillie au delà de la face supérieure 74 dégageant entièrement cette dernière pour l'introduction de la carte C.

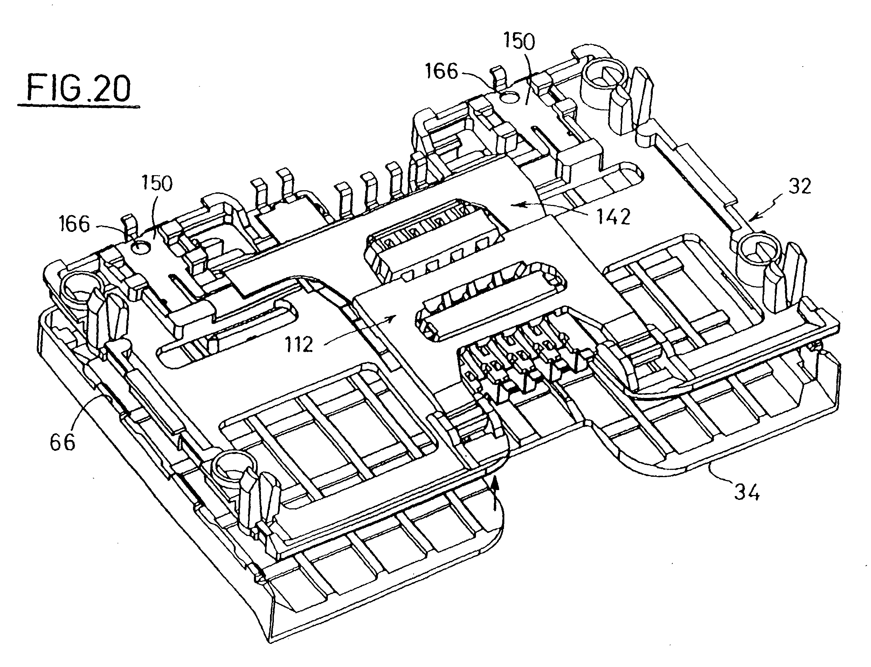

L'assemblage des composants du connecteur 30 est complétée par la fixation, comme cela est illustré à la figure 20, du capot 34 sur le socle 32 par accrochage des becs des crochets 66.

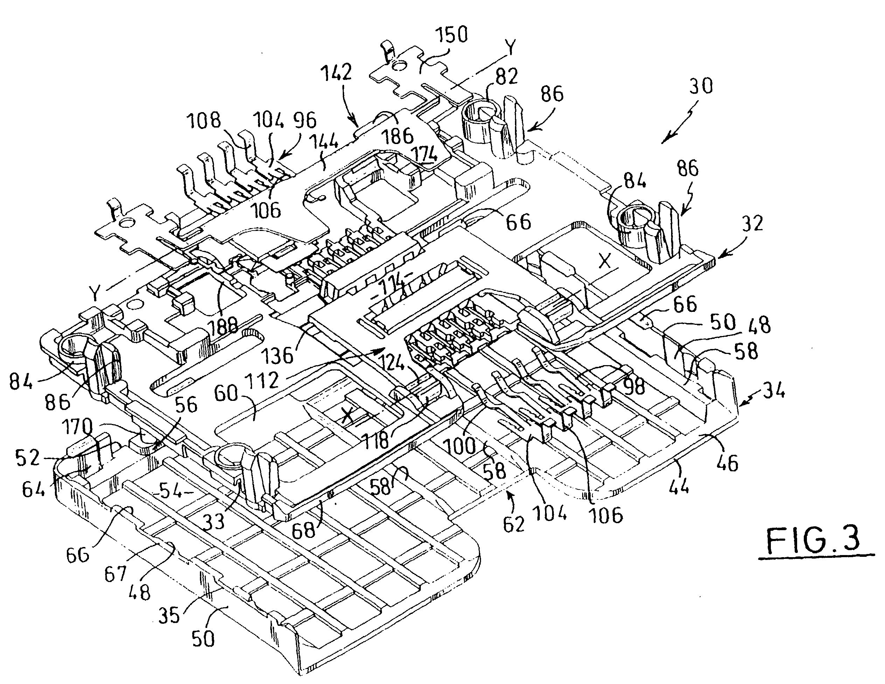

Au cours de cette opération de fixation, par déplacement vertical de bas en haut du capot 34 par rapport au socle 32 (en considérant la figure 20), les doigts ou pions 170 pénètrent consécutivement à travers les trous 168 du socle 32 et les trous alignés 166 des plaques 150 de la bascule 142 immobilisant ainsi longitudinalement les plaques 150 par rapport au socle 32. Au cours de cette opération, et afin d'éviter ultérieurement un phénomène intempestif "d'ouverture" transversale du connecteur vers l'extérieur, notamment lors de l'introduction de la carte, on peut prévoir un emboîtement complémentaire de la partie avant 35 des bords latéraux 50 du couvercle 34 dans des parties complémentaires 33 du socle 32 (voir figure 3).

L'opération finale d'assemblage du capot 34 est de préférence complétée par un sertissage par déformation à chaud des extrémités libres des doigts 170 qui font saillie verticalement au delà des plaques 150.

Cette opération de sertissage confère une grande rigidité à l'assemblage et immobilise de manière fiable la bascule 142, dont les plaques 150 sont « pincées » en appui vertical contre les surfaces planes 162, qui peut alors exercer ses fonctions dans les meilleures conditions, c'est à dire avec une grande précision géométrique et une maîtrise des différents efforts.

Il est à noter que la conception du connecteur est telle que tous les efforts et contraintes sont regroupés dans une même zone, c'est à dire la zone autour des implantations des plaques de fixation 150. Cette disposition est particulièrement avantageuse car toutes les contraintes internes, résultant notamment de l'action élastique de la bascule 142 qui est montée précontrainte, sont regroupées dans une zone de très grande rigidité du connecteur. Ainsi, le connecteur ne présente pas de risque de déformation intempestive lors des opérations de chauffage en vue de sa fixation et du raccordement de ses sorties selon la technique dite de refusion qui fait appel à des températures de l'ordre de 260°C.

La fixation du capot 34 sur le socle 32 a été décrite pour former un connecteur complet 30 constituant un ensemble.

Il est bien entendu possible de monter préalablement le sous-ensemble illustré à la figure 19 sur une plaque à circuit imprimé en réalisant les opérations de soudage ou de brasage nécessaires au raccordement électrique des contacts 96, du commutateur de fin de course 200 et des pattes 196 de la bascule 142, puis de venir rapporter ultérieurement le capot 34 en matière plastique, ce mode de montage interdisant bien entendu l'opération complémentaire de sertissage à chaud des doigts 170.

On décrira maintenant le fonctionnement de la barre de commande 114 et de la bascule 142 lors de l'introduction et de l'extraction de la carte C dans le connecteur 30 et ceci en référence aux figures 21 à 26.

Aux figures 21 et 24, le levier 112 avec sa barre de commande 114 est illustré dans sa position en retrait vers laquelle il est rappelé élastiquement par la bascule 142, position dans laquelle les extrémités 100 des contacts 96 sont escamotées.

Dans cette même position, les extrémités libres 190 des pattes 186 d'actionnement de la bascule 142 font saillie à l'intérieur de la fente 36 au voisinage du fond arrière de cette dernière.

On a représenté schématiquement aux figures 22, 23 et 25, 26 la partie longitudinale d'extrémité avant d'une carte C dont l'épaisseur moyenne est délimitée par ses faces principales opposées 38 et 40 et qui comporte aussi localement des portions gravées ou embossées conférant à la carte C une épaisseur supérieure délimitée par des portions de surface 39 et 41.

La carte C est introduite longitudinalement d'avant en arrière, c'est-à-dire de la droite vers la gauche en considérant les figures 21 à 26, et son bord transversal avant 42 pénètre progressivement à l'intérieur de la fente 36 jusqu'à atteindre la position intermédiaire illustrée aux figures 22 et 25 dans laquelle il s'étend au droit des portions d'extrémité incurvées 190 des pattes d'actionnement 186 de la bascule 142.

Lorsque le mouvement d'introduction de la carte C se poursuit longitudinalement vers la gauche au delà de la position intermédiaire illustrée aux figures 22 et 25, le bord transversal avant 42 coopère simultanément avec les surfaces convexes 192 des extrémités incurvées 190 des pattes d'actionnement 186 pour les effacer à travers les trous 188 du socle 32.

Cette action du bord 42 de la carte C sur les pattes d'actionnement 186 provoque un basculement de l'ensemble de la partie centrale, et notamment de la traverse 144, de la bascule 142 autour de son axe de rotation Y-Y dans le sens anti-horaire en considérant les figures 21 à 26.

Au cours du mouvement d'introduction de la carte C, et dès que son bord avant 42 vient en contact avec les pattes d'actionnement 186 qui exercent alors une force d'appui sur la face en vis-à-vis de la carte C, les charges électrostatiques qui sont éventuellement portées par la carte en matière plastique C sont déchargées vers le circuit de masse de la plaque à circuit imprimé de l'appareil de lecture/écriture auquel elles sont transmises par la bascule métallique 142 avec ses pattes de raccordement 196, et ceci avant l'établissement du contact électrique entre les contacts 96-100 et les plages ou plots de la carte C.

Le mouvement d'introduction de la carte C et de basculement de la bascule 142 se poursuivent jusqu'à atteindre la position finale d'introduction illustrée aux figures 23 et 26.

Le mouvement de rotation de la bascule 142 vers sa seconde position angulaire s'effectue à l'encontre de l'élasticité des barres de torsion 148 et le couple de rappel en rotation exercé par les barres de torsion sur la partie centrale de la bascule augmente proportionnellement.

La bascule 142 est alors dans sa seconde position angulaire dans laquelle l'extrémité libre des bras de commande 174 ne coopère plus avec les surfaces de commande 140 du levier 112.

Cette seconde position angulaire est au maximum déterminée par la venue en butée des bras de commande contre les surfaces de butée 181.

De ce fait, le levier 112 peut pivoter librement autour de son axe X-X, dans le sens horaire en considérant les figures 21 à 26 et ceci sous l'action de l'effort de rappel élastique qui est appliqué à la barre de commande 114 par les becs 102 qui coopèrent avec les cloisons 130.

Les extrémités incurvées de contact 100 sont alors libres de venir en contact, par atterrissage vertical de bas en haut avec les plages conductrices formées en vis-à-vis sur la face inférieure 38 de la carte C.

L'atterrissage des contacts 96-100 ne s'effectue donc qu'en toute fin de course d'introduction de la carte C dans le connecteur 32 et très progressivement, et ceci avant l'action de la carte sur le commutateur 200.

Grâce à la conception selon l'invention, la position de l'axe X-X d'articulation du levier 112 qui porte la barre 114 de commande des contacts est telle, très à l'avant du connecteur, que le bras de levier est très long et que en position escamotée des contacts, la déflexion des contacts est sensiblement la même pour les deux rangées de contacts.

Lorsque l'on extrait la carte C hors du connecteur 30, et dès que le bord 42 atteint à nouveau sa position longitudinale illustrée aux figures 22 et 25, la bascule 142 pivote autour de l'axe Y-Y dans le sens horaire, sous l'effet du couple de rappel qui lui est appliqué à la traverse 144 par les barres de torsion 148 de manière que les bras de commande 174 agissent à nouveau sur les surfaces de commande 140 pour faire pivoter le levier 112 dans le sens anti-horaire autour de l'axe X-X pour que la barre de commande 114 provoque à nouveau l'effacement des extrémités 100 de contact des lames de contact 96, et ceci après la disparition de l'action de la carte sur le commutateur 200.

En se reportant à la variante illustrée à la figure 31, on voit qu'il est possible de conformer les cloisons 130 qui coopèrent avec les becs 102 de manière dissymétrique afin que, malgré le décalage longitudinal de deux cloisons alignées par rapport à l'axe de pivotement 124, les extrémités incurvées 100 de deux lames alignées 96 occupent la même altitude en l'absence de carte, notamment afin d'éviter que les extrémités incurvées des lames de droite en considérant la figure 31, ne fassent légèrement saillie au dessus du plan de la face supérieure 75.

A cet effet, la cloison de gauche est amincie et est conformée avec une facette inférieure 131 inclinée selon un angle correspondant à la pente du bec 102 de lame de contact 96 de gauche la plus éloignée de l'axe 124, de manière que cette facette serve d'appui au bec 102 de la lame de gauche, tandis que c'est le bord transversal libre 133 de la cloison 130 de droite qui coopère avec le bec 102 appartenant à la lame de contact 96 de gauche qui est plus proche de l'axe 124,

Lors de l'extraction, l'action des extrémités libres incurvées 190 des pattes d'actionnement 186 sur le bord transversal 42 de la carte C procure un effet d'éjection partielle de la carte C hors du connecteur, et ceci dés que ce bord franchit le coude convexe de la partie incurvée 190.

La configuration de la bascule 142 et son agencement dans le connecteur procurent de plus une sensation tactile à l'utilisateur tant lors de l'introduction que de l'extraction de la carte.

Aux figures 23 et 26, on représenté le levier 112 en appui vertical, par la face supérieure de la barre de commande 114, contre la face inférieure en vis-à-vis de la carte C. La barre de commande 114 devrait normalement « retomber » par gravité en appui vertical sur les becs 102 des lames de contact 96. Cette disposition peut toutefois s'avérer insatisfaisante si, sous l'effet de vibrations parasites, la barre de commande vient à solliciter un ou plusieurs contacts verticalement jusqu'à aboutir à un décollement des lames correspondantes des plages de la carte.

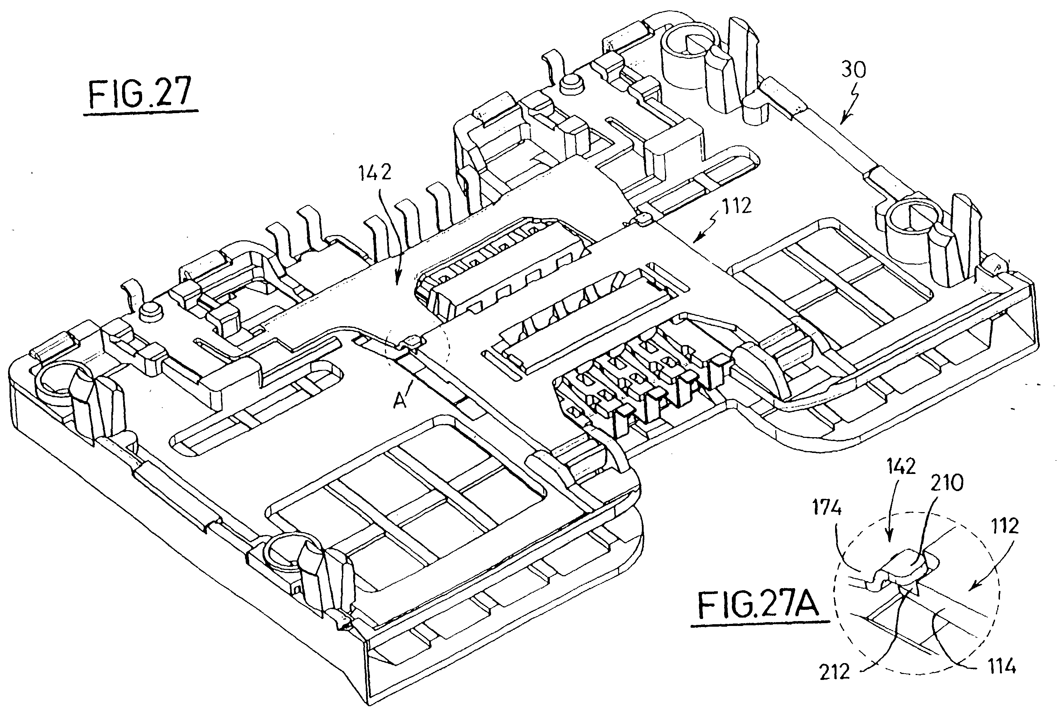

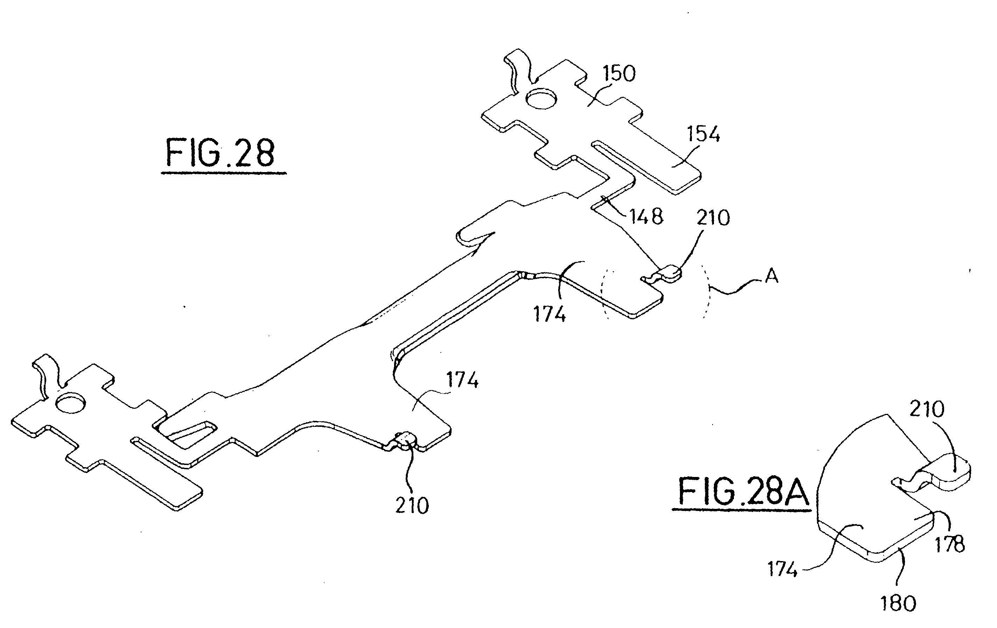

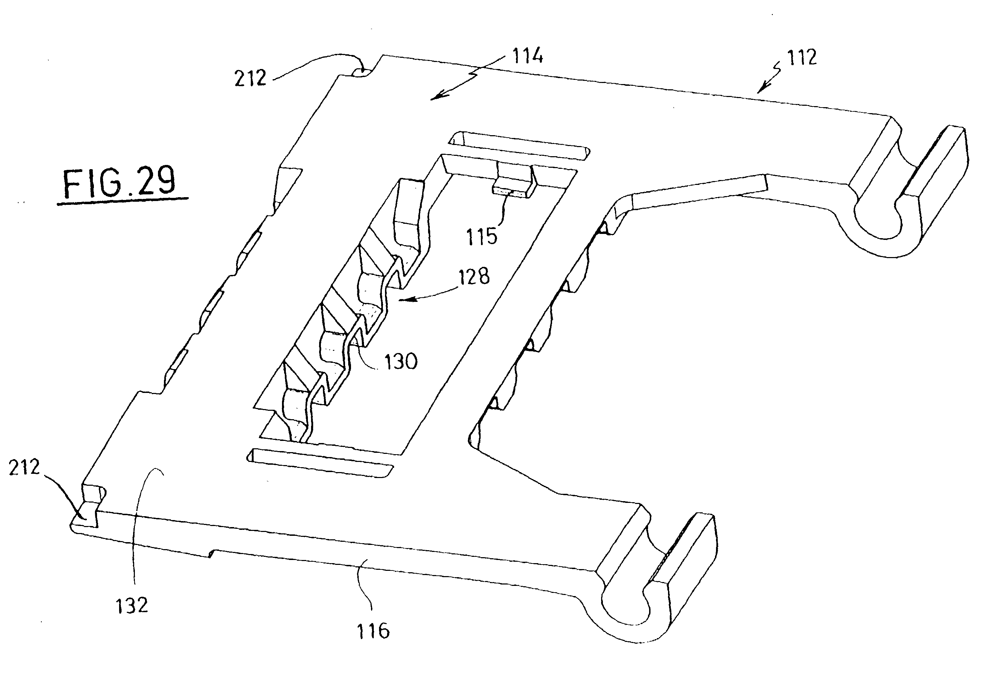

Afin de remédier à cet inconvénient et pour que la barre de commande occupe son état illustré aux figures 23 et 26 dans lequel elle ne repose pas sur les becs de contact 102, on peut faire appel à la variante illustrée aux figures 27 à 29.

Dans cette variante, chacune des extrémités longitudinales arrière 180 des bras de commande 174 est conformée en fourche, c'est à dire qu'elle comporte une patte de retenue 210 qui s'étend longitudinalement dans un plan parallèle à celui des bras de commande 174 mais dans un plan décalé verticalement vers le bas de manière à s'étendre en dessous d'une surface de retenue complémentaire 212 formée dans la face inférieure 132 de la barre de commande 114 au voisinage de l'extrémité libre arrière des longerons 116.

Ainsi, les déplacements de la barre de commande et des bras de commande sont couplés dans les deux sens.

Bien entendu, dans le cas où le connecteur est monté à l'envers par rapport à la position illustrée aux figures 21 à 26, la face 132 de la barre de commande 114 vient naturellement par gravité occuper sa position illustrée aux figures 23 et 26.

La conception selon l'invention, outre les avantages déjà mentionnés, permet, en faisant appel à deux composants simples et réalisés dans des matériaux peu coûteux, de réaliser un connecteur du type à atterrissage des contacts en rapportant ces deux éléments 112 et 142 sous la face inférieure d'un socle dont la conception permet sans changement d'être utilisé pour la réalisation d'un connecteur à contacts glissants en l'associant avec le capot 34.

La différence de prix de revient entre la version classique et la version à atterrissage des contacts est ainsi réduite du fait de la réduction du nombre des pièces et d'une conception qui rend l'assemblage très facilement automatisable.

Au cas où le socle n'est pas équipé des éléments 112 et 142, il peut être nécessaire de disposer d'un frein de carte en position introduite.

A cet effet, la variante de réalisation illustrée à la figure 30 peut être utilisée dans laquelle deux languettes élastiques 214 sont réalisées par moulage dans la face supérieure du socle pour coopère avec la face inférieure de la carte et plaquer cette dernière vers le haut dans le capot 34.

L'invention n'est pas limitée au cas où le connecteur comporte deux rangées parallèles de contacts mais trouve aussi à s'appliquer pour un connecteur à une seule rangée de contacts.

## Revendications

1. Connecteur (30) pour le raccordement électrique d'une carte (C) à circuit(s) intégré(s) à contact dont une face inférieure (38) comporte des plages de raccordement,
du type comportant un socle (32) en matériau isolant formant support pour des lames (96) de contact électrique déformables élastiquement qui s'étendent parallèlement à une direction longitudinale d'introduction (I) de la carte (C) et dont des extrémités incurvées de contact (100), dans une position de contact, font saillie au delà de la face supérieure (74) du socle (32) pour coopérer avec les plages de raccordement de la carte,
et du type dans lequel une barre (114) de commande de la position des extrémités (100, 102) de contact des lames de contact (96), reliée à un levier (112) monté pivotant par rapport au socle (32) autour d'un axe d'articulation (X-X) perpendiculaire à la direction (I) d'introduction longitudinale de la carte (C), est montée mobile entre
- une position en retrait dans laquelle les extrémités de contact (100) sont effacées en deçà de la face supérieure (74) du socle (32), à l'encontre de leur élasticité propre, et vers laquelle elle est rappelée par des moyens élastiques ; et
- une position de contact dans laquelle les extrémités de contact (100) sont en position de contact et vers laquelle elle est déplacée lorsque la carte (C), en fin de sa course d'introduction, coopère (42) avec des moyens (186, 190) formant came associés à la barre de commande,
**caractérisé en ce qu'**il comporte un organe unique (142) de commande (174) des déplacements, et de rappel élastique (148), de la barre de commande (114).

2. Connecteur selon la revendication précédente
**caractérisé en ce que** l'organe unique (142) est monté basculant par rapport au socle (32), autour d'un axe de rotation (Y-Y) parallèle à l'axe d'articulation du levier, entre :
- une première position angulaire vers laquelle il est rappelé élastiquement et dans laquelle il rappelle élastiquement la barre de commande (114) vers sa position en retrait ; et
- une seconde position angulaire vers laquelle il est déplacé par la carte (C), qui coopère avec des moyens (186, 190) formant came agencés sur l'organe unique (142), et dans laquelle la barre de commande (114) est dans sa position de contact.

3. Connecteur selon la revendication précédente,
**caractérisé en ce que** l'organe unique (142) comporte une traverse (144) dont chacune des deux extrémités opposées est reliée au socle (32) par une barre de torsion (148), et **en ce que** les deux barres de torsion (148) sollicitent élastiquement l'organe unique (142) en rotation vers sa première position angulaire.

4. Connecteur selon l'une quelconque des revendications 2 ou 3, **caractérisé en ce que** l'organe unique (142) comporte un bras de commande (174) qui s'étend radialement et dont l'extrémité libre (180) s'étend en regard d'une surface (140) de commande de la barre de commande (114) avec laquelle il coopère, lorsque l'organe unique (142) est dans sa première position angulaire, pour solliciter la barre (114) vers sa position en retrait, et par rapport à laquelle il s'efface, lorsque l'organe unique est dans sa seconde position angulaire, pour permettre à la barre de commande de se déplacer vers sa position de contact sous l'action de l'élasticité propre des lames de contact (96).

5. Connecteur selon la revendication 4, **caractérisé en ce que** le bras de commande (174) s'étend longitudinalement d'arrière en avant, sensiblement parallèlement au plan de la face supérieure (74) du socle (32), à partir de la traverse (144) de l'organe unique (142).

6. Connecteur selon l'une des revendications 4 ou 5,
**caractérisé en ce que** le bras de commande (174) s'étend en regard d'une surface de butée (181) du socle avec laquelle il coopère pour déterminer une position angulaire maximale de l'organe unique (142).

7. Connecteur selon l'une quelconque des revendications précédentes, **caractérisé en ce que** l'organe unique (142) comporte deux bras parallèles de commande (174).

8. Connecteur selon l'une quelconque des revendications 2 à 7, **caractérisé en ce que** l'organe unique (142) comporte une patte d'actionnement (186) qui s'étend radialement et qui comporte un profil de came (190) avec lequel coopère la carte (C, 42) pour provoquer la rotation de l'organe unique (142) de sa première position angulaire vers sa seconde position angulaire.

9. Connecteur selon la revendication précédente,
**caractérisé en ce que** l'extrémité libre (190) de la patte d'actionnement (186) s'étend, en l'absence de carte, en saillie au dessus de la face supérieure (74) du socle (32).

10. Connecteur selon l'une des revendications 8 ou 9 prise en combinaison avec la revendication 3, **caractérisé en ce que** la patte d'actionnement (186) s'étend radialement d'avant en arrière à partir de la traverse (144) de l'organe unique (142).

11. Connecteur selon l'une quelconque des revendications 8 à 10 prise en combinaison avec l'une quelconque des revendications 4 à 7, **caractérisé en ce que** la patte d'actionnement (186) forme un angle d'environ 45° par rapport au bras de commande (174).

12. Connecteur selon l'une quelconque des revendications 8 à 11, **caractérisé en ce que** l'extrémité libre de la patte d'actionnement (186) est conformée en un patin qui, en position introduite de la carte, coopère avec une face (38) de la carte (C) sur laquelle elle exerce une force d'appui, notamment pour constituer un frein de carte.

13. Connecteur selon l'une quelconque des revendications 8 à 12, **caractérisé en ce que** l'organe unique (142) comporte deux pattes parallèles d'actionnement (186), et **en ce que** la carte (C, 42) coopère simultanément avec les deux profils de came (190).

14. Connecteur selon l'une quelconque des revendications 2 à 13, **caractérisé en ce que** l'axe (X-X) d'articulation du levier, la barre de commande (114) , l'axe (Y-Y) de rotation de l'organe unique (142), et les moyens formant came (190) sont agencés consécutivement d'avant en arrière selon le sens d'introduction longitudinale de la carte.

15. Connecteur selon l'une quelconque des revendications 2 à 14, **caractérisé en ce que** l'organe unique (142) et le levier (112) sont montés sous une face inférieure (88) du socle (32).

16. Connecteur selon la revendication précédente prise en combinaison avec la revendication 6, **caractérisé en ce que** la surface de butée (181) est formée dans ladite face inférieure du socle (32).

17. Connecteur selon l'une quelconque des revendications 2 à 16, **caractérisé en ce que** l'organe unique (142) est une pièce en tôle découpée et pliée.

18. Connecteur selon la revendication précédente,
**caractérisé en ce que** la partie fixe de l'organe unique (142) comporte au moins une patte (196) de raccordement électrique prévue pour être reliée au plan de masse du circuit imprimé d'une plaque qui porte le socle pour évacuer les charges électrostatiques de la carte (C).

19. Connecteur selon l'une quelconque des revendications précédentes **caractérisé en ce que** la barre de commande (114) s'étend perpendiculairement à la direction longitudinale des lames de contact (96), et **en ce qu'**elle coopère avec des extrémités libres (102) en forme de bec de chaque lame de contact (96) qui prolongent leurs extrémités incurvées (100) de contact.

20. Connecteur selon l'une quelconque des revendications précédentes **caractérisé en ce que** le levier (112) comporte deux longerons parallèles (116) reliés entre eux par la barre de commande (114) et qui s'étendent de part et d'autre d'un groupe de lames parallèles de contact (96).

## Patentansprüche

1. Verbinder (30) zum elektrischen Verbinden einer Kontakt-Speicherkarte (C) mit integrierter(n) Schaltung(en) wovon eine Unterseite (38) Verbindungsbereiche beinhaltet,
in der Ausführung, welche einen Sockel (32) aus Isoliermaterial enthält, welcher einen Träger bildet für elastisch verformbare elektrische Kontaktzungen (96), die sich parallel zu einer Längseinführungsrichtung (I) der Karte (C) erstrecken, und deren gebogene Kontaktenden (100) in einer Kontaktstellung über die Oberseite (74) des Sockels (32) hinaus überstehen, um mit den Verbindungsbereichen der Karte zusammenzuwirken,
und in der Ausführung, bei der ein Stab (114) zum Steuern der Stellung der Kontaktenden (100, 102) der Kontaktzungen (96), der mit einem Hebel (112) verbunden ist, welcher bezogen auf den Sockel (32) um eine Gelenkachse (X-X) senkrecht zur Richtung der Längseinführungsrichtung (I) der Karte (C) schwenkbar angebracht ist, beweglich angebracht wird zwischen:
- einer zurückspringenden Position, in welcher die Kontaktenden (100) diesseits der Oberseite (74) des Sockels (32) verschwinden, entgegen ihrer Eigenelastizität und hin zu der er durch elastische Mittel zurückgeholt wird; und
- einer Kontaktstellung, bei welcher die Kontaktenden (100) in Kontaktstellung sind und hin zu der er verschoben wird, wenn die Karte (C) am Ende ihres Einführungsweges mit Nocken bildenden Mitteln (186, 190) zusammenwirkt (42), welche mit dem Steuerstab verbunden sind,
**dadurch gekennzeichnet, dass** er ein Einheitsorgan (142) beinhaltet zur Steuerung (174) der Bewegungen und zum elastischen Rückholen (148) des Steuerstabs (114).

2. Verbinder gemäß dem vorstehenden Anspruch, **dadurch gekennzeichnet, dass** das Einheitsorgan (142) bezogen auf den Sockel (32) um eine Drehachse (Y-Y) herum parallel zur Gelenkachse des Hebels wippend angebracht ist, zwischen:
- einer ersten Winkelposition hin zu der es elastisch zurückgeholt wird und in welche es den Steuerstab (114) in seine rückspringende Stellung elastisch zurückholt; und
- einer zweiten Winkelposition hin zu der es durch die Karte (C) bewegt wird, die mit Nocken bildenden Mitteln (186, 190) zusammenwirkt, die an dem Einheitsorgan (142) angeordnet sind, und in welcher sich der Steuerstab (114) in seiner Kontaktstellung befindet.

3. Verbinder gemäß dem vorstehenden Anspruch, **dadurch gekennzeichnet, dass** das Einheitsorgan (142) eine Traverse (144) beinhaltet, von welcher jedes der beiden gegenüberliegenden Enden über einen Torsionsstab (148) mit dem Sockel (32) verbunden ist, und dadurch, dass die beiden Torsionsstäbe (148) das Einheitsorgan (142) in Drehung elastisch hin zu seiner ersten Winkelposition beanspruchen.

4. Verbinder gemäß Anspruch 2 oder 3, **dadurch gekennzeichnet, dass** das Einheitsorgan (142) einen Steuerarm (174) beinhaltet, der sich radial erstreckt und dessen freies Ende (180) sich gegenüber einer Fläche (140) zur Steuerung des Steuerstabs (114) erstreckt, mit welcher er zusammenwirkt, wenn das Einheitsorgan (142) sich in seiner ersten Winkelposition befindet, um den Stab (114) hin zu seiner rückspringenden Position zu beanspruchen, und bezogen auf welche er verschwindet, wenn das Einheitsorgan sich in seiner zweiten Winkelposition befindet, um es dem Steuerstab zu ermöglichen, sich unter der Einwirkung der Eigenelastizität der Kontaktzungen (96) in seine Kontaktstellung zu bewegen.

5. Verbinder gemäß Anspruch 4, **dadurch gekennzeichnet, dass** der Steuerarm (174) sich in Längsrichtung von hinten nach vorne ungefähr parallel zur Ebene der Oberseite (74) des Sockels (32) ab der Traverse (144) des Einheitsorgans (142) erstreckt.

6. Verbinder gemäß Anspruch 4 oder 5, **dadurch gekennzeichnet, dass** der Steuerarm (174) sich gegenüber einer Anschlagfläche (181) des Sockels erstreckt, mit der er zusammenwirkt, um eine maximale Winkelposition des Einheitsorgans (142) zu bestimmen.

7. Verbinder gemäß einem der vorstehenden Ansprüche, **dadurch gekennzeichnet, dass** das Einheitsorgan (142) zwei parallele Steuerarme (174) beinhaltet.

8. Verbinder gemäß einem der Ansprüche 2 bis 7, **dadurch gekennzeichnet, dass** das Einheitsorgan (142) eine Betätigungsklaue (186) beinhaltet, die sich radial erstreckt und die ein Nockenprofil (190) beinhaltet, mit dem die Karte (C, 42) zusammenwirkt, um die Drehung des Einheitsorgans (142) aus seiner ersten Winkelposition zu seiner zweiten Winkelposition zu bewirken.

9. Verbinder gemäß dem vorstehenden Anspruch, **dadurch gekennzeichnet, dass** das freie Ende (190) der Betätigungsklaue (186) sich bei Fehlen der Karte über der Oberseite (74) des Sockels (32) überstehend erstreckt.

10. Verbinder gemäß einem der Ansprüche 8 oder 9, kombiniert mit Anspruch 3, **dadurch gekennzeichnet, dass** die Betätigungsklaue (186) sich radial von vorne nach hinten ab der Traverse (144) des Einheitsorgans (142) erstreckt.

11. Verbinder gemäß einem der Ansprüche 8 bis 10 kombiniert mit einem der Ansprüche 4 bis 7, **dadurch gekennzeichnet, dass** die Betätigungsklaue (186) zum Steuerarm (174) einen Winkel von ungefähr 45° bildet.

12. Verbinder gemäß einem der Ansprüche 8 bis 11, **dadurch gekennzeichnet, dass** das freie Ende der Betätigungsklaue (186) gestaltet wird aus einem Tragsegment, das bei eingeführter Kartenposition mit einer Seite (38) der Karte (C) zusammenwirkt, auf welche sie eine Auflagekraft ausübt, insbesondere um eine Kartenbremse zu bilden.

13. Verbinder gemäß einem der Ansprüche 8 bis 12, **dadurch gekennzeichnet, dass** das Einheitsorgan (142) zwei parallele Betätigungsklauen (186) beinhaltet, und dadurch, dass die Karte (C, 42) gleichzeitig mit den beiden Nockenprofilen (190) zusammenwirkt.

14. Verbinder gemäß einem der Ansprüche 2 bis 13, **dadurch gekennzeichnet, dass** die Gelenkachse (X-X) des Hebels, der Steuerstab (114), die Drehachse (Y-Y) des Einheitsorgans (142) und die Nocken bildenden Mittel (190) aufeinanderfolgend von vorne nach hinten gemäß der Längseinführungsrichtung der Karte angeordnet sind.

15. Verbinder gemäß einem der Ansprüche 2 bis 14, **dadurch gekennzeichnet, dass** das Einheitsorgan (142) und der Hebel (112) unter einer Unterseite (88) des Sockels (32) angebracht sind.

16. Verbinder gemäß dem vorstehenden Anspruch kombiniert mit Anspruch 6, **dadurch gekennzeichnet, dass** die Anschlagfläche (181) in der bezeichneten Unterseite des Sockels (32) gebildet wird.

17. Verbinder gemäß einem der Ansprüche 2 bis 16, **dadurch gekennzeichnet, dass** das Einheitsorgan (142) ein Teil aus gestanztem gefalztem Blech ist.

18. Verbinder gemäß dem vorstehenden Anspruch, **dadurch gekennzeichnet, dass** der feststehende Teil des Einheitsorgans (142) mindestens eine Klaue zur elektrischen Verbindung (196) beinhaltet, die dazu vorgesehen ist, mit dem Massepotential der gedruckten Schaltung einer Platte verbunden zu werden, welche den Sockel trägt, um die elektrostatischen Aufladungen der Karte (C) abzuführen.

19. Verbinder gemäß einem der vorstehenden Ansprüche, **dadurch gekennzeichnet, dass** der Steuerstab (114) sich senkrecht zur Längsrichtung der Kontaktzungen (96) erstreckt, und dadurch, dass er zusammenwirkt mit schnabelförmigen freien Enden (102) jeder Kontaktzunge (96), die ihre gebogenen Kontaktenden (100) verlängern.

20. Verbinder gemäß einem der vorstehenden Ansprüche, **dadurch gekennzeichnet, dass** der Hebel (112) zwei parallele miteinander über den Steuerstab (114) verbundene Längsträger (116) beinhaltet und diese sich zu beiden Seiten einer Gruppe paralleler Kontaktzungen (96) erstrecken.

## Claims

1. Connector (30) for the electrical connection of a contact-type smart card (C), a lower face (38) of which has connection areas,
of the type having a base (32) made of insulating material forming a support for elastically deformable electrical-contact blades (96) which extend parallel to a longitudinal direction of insertion (I) of the card (C) and the curved contact ends (100) of which blades, in a contact position, project from the upper face (74) of the base (32) in order to engage with the connection areas on the card,
and of the type in which a bar (114) for controlling the position of the contact ends (100, 102) of the contact blades (96), which is connected to a lever (112) mounted so as to pivot with respect to the base (32) about a pivot axis (X-X) perpendicular to the longitudinal direction of insertion (I) of the card (C), is mounted so as to move between:
- a retracted position in which the contact ends (100) are moved away from the upper face (74) of the base (32) in opposition to their intrinsic springiness, and into which position the control bar is returned by elastic means; and
- a contact position in which the contact ends (100) are in the contact position and towards which it is moved when the card (C) at the end of its insertion travel, engages (42) with cam-forming means (186, 190) associated with the control bar,
**characterized in that** it has a single device (142) for controlling (174) the movements, and the elastic return (148), of the control bar (114).

2. Connector according to the preceding claim, **characterized in that** the single device (142) is mounted so as to rock with respect to the base (32), about an axis of rotation (Y-Y) parallel to the pivot axis of the lever, between:
- a first angular position into which it is elastically returned and in which it elastically returns the control bar (114) back to its retracted position; and
- a second angular position into which it is moved by the card (C), which engages with cam-forming means (186, 190) arranged on the single device (142), and in which the control bar (114) is in its contact position.

3. Connector according to the preceding claim, **characterized in that** the single device (142) has a transverse member (144), each of the two opposite ends of which is connected to the base (32) by a torsion bar (148) and **in that** the two torsion bars (148) elastically force the single device (142) to rotate towards its first angular position.

4. Connector according to either of Claims 2 and 3, **characterized in that** the single device (142) has a control arm (174) which extends radially and the free end (180) of which extends opposite a surface (140) for controlling the control bar (114) with which this arm engages, when the single device (142) is in its first angular position, in order to force the bar (114) back to its retracted position, and from which it is moved away, when the single device is in its second angular position, in order to allow the control bar to move to its contact position due to the action of the intrinsic springiness of the contact blades (96).

5. Connector according to Claim 4, **characterized in that** the control arm (174) extends longitudinally from the rear to the front, approximately parallel to the plane of the upper face (74) of the base (32), from the transverse member (144) of the single device (142).

6. Connector according to either of Claims 4 and 5, **characterized in that** the control arm (174) extends opposite a stop surface (181) of the base, with which surface it engages in order to define the maximum angular position of the single device (142).

7. Connector according to any one of the preceding claims, **characterized in that** the single device (142) has two parallel control arms (174).

8. Connector according to any one of Claims 2 to 7, **characterized in that** the single device (142) has an actuating tab (186) which extends radially and which has a cam profile (190) with which the card (C, 42) engages in order to rotate the single device (142) from its first angular position to its second angular position.

9. Connector according to the preceding claim, **characterized in that** the free end (190) of the actuating tab (186) extends, in the absence of a card, so as to project above the upper face (74) of the base (32).

10. Connector according to either of Claims 8 and 9 taken in combination with Claim 3, **characterized in that** the actuating tab (186) extends radially, from the front to the rear, from the transverse member (144) of the single device (142).

11. Connector according to any one of Claims 8 to 10 taken in combination with any one of Claims 4 to 7, **characterized in that** the actuating tab (186) makes an angle of approximately 45° with respect to the control arm (174).

12. Connector according to any one of Claims 8 to 11, **characterized in that** the free end of the actuating tab (186) is shaped in the form of a runner which, in the inserted position of the card, engages with one face (38) of the card (C) on which it exerts a bearing force, especially so as to constitute a card brake.

13. Connector according to any one of Claims 8 to 12, **characterized in that** the single device (142) has two parallel actuating tabs (186) and **in that** the card (C, 42) engages simultaneously with the two cam profiles (190).

14. Connector according to any one of Claims 2 to 13, **characterized in that** the pivot axis (X-X) of the lever, the control bar (114), the axis of rotation (Y-Y) of the single device (142) and the cam-forming means (190) are arranged consecutively from the front to the rear along the direction of longitudinal insertion of the card.

15. Connector according to any one of Claims 2 to 14, **characterized in that** the single device (142) and the lever (112) are mounted beneath a lower face (88) of the base (32).

16. Connector according to the preceding claim taken in combination with Claim 6, **characterized in that** the stop surface (181) is formed in the said lower face of the base (32).

17. Connector according to any one of Claims 2 to 16, **characterized in that** the single device (142) is a piece made from cut and folded sheet metal.

18. Connector according to the preceding claim, **characterized in that** the stationary part of the single device (142) has at least one electrical-connection tab (196) intended to be connected to the earth plane of the printed circuit of a board which supports the base, in order to remove any electrostatic charges from the card (C).

19. Connector according to any one of the preceding claims, **characterized in that** the control bar (114) extends perpendicularly to the longitudinal direction of the contact blades (96) and **in that** it engages with beak-shaped free ends (102) of each contact blade (96) which extend their curved contact ends (100).

20. Connector according to any one of the preceding claims, **characterized in that** the lever (112) has two parallel longitudinal members (116) which are connected together by the control bar (114) and which extend on each side of a group of parallel contact blades (96).
